(19) 

Europäisches
Patentamt
European
Patent Office
Office européen
des brevets

(11) **EP 4 629 710 A1**

(12) **EUROPEAN PATENT APPLICATION**
published in accordance with Art. 153(4) EPC

(43) Date of publication:
**08.10.2025 Bulletin 2025/41**

(21) Application number: **24741311.5**

(22) Date of filing: **11.01.2024**

(51) International Patent Classification (IPC):
*H04W 56/00* (2009.01)   *H04J 3/06* (2006.01)

(52) Cooperative Patent Classification (CPC):
**H04J 3/06; H04L 7/00; H04W 56/00**

(86) International application number:
**PCT/CN2024/071710**

(87) International publication number:
**WO 2024/149315 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.01.2023   CN 202310091418
10.02.2023   CN 202310127538
24.05.2023   CN 202310601034**

(71) Applicant: **Huawei Technologies Co., Ltd.
Shenzhen, Guangdong 518129 (CN)**

(72) Inventors:
- LIU, Xiang
  Shenzhen, Guangdong 518129 (CN)
- FAN, Qirui
  Shenzhen, Guangdong 518129 (CN)
- ZHENG, Shuqian
  Shenzhen, Guangdong 518129 (CN)

(74) Representative: **Huawei European IPR
Huawei Technologies Duesseldorf GmbH
Riesstraße 25
80992 München (DE)**

(54) **CLOCK RECOVERY METHOD, DEVICE AND SYSTEM**

(57)   This application provides a method, an apparatus, and a system for clock recovery, which may be used in an optical transport network. The method includes: receiving a first optical transport network OTN frame data stream, obtaining, from the first OTN frame data stream, a server layer clock and phase difference information carried in a second OTN frame, and adjusting a reference clock of the second OTN frame based on the server layer clock and the phase difference information, where the reference clock of the second OTN frame is used to recover a clock of the second OTN frame. According to the method for clock recovery provided in this application, precision of clock recovery of an OTN frame can be improved, thereby improving system performance.

FIG. 15A

CONT. FROM
FIG. 15A

CONT. FROM
FIG. 15A

S1510: Send a first
OTN frame data stream

S1511: Obtain a server layer clock
and first phase difference information
of a second OTN frame from the first
OTN frame data stream

S1512: Generate a local phase
difference based on a reference clock
of the second OTN frame of the
destination device and the server
layer clock

S1513: Accumulate the local phase
difference to the first phase difference
information to generate second phase
difference information

S1514: Adjust a clock control signal
of the reference clock of the second
OTN frame of the destination device
based on the second phase difference
information

S1515: Adjust the reference clock of
the second OTN frame based on the
clock signal

FIG. 15B

**Description**

This application claims priorities to Chinese Patent Application No. 202310091418.7, filed with the China National Intellectual Property Administration on January 14, 2023 and entitled "METHOD, DEVICE, AND SYSTEM FOR CLOCK RECOVERY", to Chinese Patent Application No. 202310127538.8, filed with the China National Intellectual Property Administration on February 10, 2023 and entitled "METHOD, DEVICE, AND SYSTEM FOR CLOCK RECOVERY", and to Chinese Patent Application No. 202310601034.5, filed with the China National Intellectual Property Administration on May 24, 2023 and entitled "METHOD, DEVICE, AND SYSTEM FOR CLOCK RECOVERY", all of which are incorporated herein by reference in their entireties.

**TECHNICAL FIELD**

This application relates to the field of optical transport technologies, and more specifically, to a method, device, and system for clock recovery.

**BACKGROUND**

An optical transport network (optical transport network, OTN) based on a wavelength division multiplexing technology can provide a higher transmission rate, higher transmission efficiency, and a better operations, administration and maintenance (operations, administration and maintenance, OAM) capability, and has become a mainstream technology of a backbone transmission network.

An OTN system needs to transmit both a plurality of types of service data and timing information (mainly a clock synchronization frequency) corresponding to each service. One of the core technologies is how to map service data of different types and rates to an OTN data frame and recover service data and clock information in an OTN device.

**SUMMARY**

Embodiments of this application provide a method, device, and system for clock recovery, so that a destination device can accurately recover a server layer clock, to achieve an objective of improving system performance.

According to a first aspect, an embodiment of this application provides a method for clock recovery. The method may be performed by a destination device or a component (such as a chip or a chip system) of the destination device. This is not limited in this application. The method includes: receiving a first optical transport network OTN frame data stream; obtaining a server layer clock from the first OTN frame data stream; obtaining, from the first OTN frame data stream, phase difference information carried in a second OTN frame carried in the first OTN frame data stream, where the phase difference information is a sum of phase differences between one or more groups of two adjacent upstream devices in one or more upstream devices of the destination device through which the second OTN frame passes; and the phase differences between the one or more groups of two adjacent upstream devices are an integer quantity of periods of a reference clock; and adjusting a reference clock of the second OTN frame based on the server layer clock and the phase difference information, where the reference clock of the second OTN frame is used to recover a clock of the second OTN frame.

In some embodiments, a period of an overhead area that carries the phase difference information carried in the second OTN frame is less than or equal to 1/2 of a period of the second OTN frame. For example, the period of the overhead area that carries the phase difference information carried in the second OTN frame may be 1/4, 1/3, or the like of the period of the second OTN frame.

Based on the foregoing solution, the destination device adjusts the reference clock of the second OTN frame of the destination device by obtaining accumulated phase differences between every two adjacent devices in the upstream device of the destination device. Compared with the process of adjusting the reference clock of the second OTN frame of the destination device by using a reference clock of a second OTN frame of each device in a system, the process avoids a process of extracting the reference clock of the second OTN frame of each device in the system, and reduces complexity and a high overhead of clock recovery. Because the accumulated phase differences can implement lossless estimation of the reference clock of the second OTN frame, this solution of this application can improve accuracy of adjusting the reference clock of the second OTN frame of the destination device, to achieve an objective of improving system performance.

With reference to the first aspect, in some implementations of the first aspect, the adjusting a reference clock of the second OTN frame based on the phase difference information and the server layer clock includes: generating a phase difference between the destination device and the adjacent upstream device of the destination device based on the server layer clock, where the phase difference between the destination device and the adjacent upstream device of the destination device is an integer quantity of periods of a reference clock; generating a frequency deviation based on the phase difference information and the phase difference between the destination device and the adjacent upstream device of the destination device; and adjusting the reference clock of the second OTN frame based on the frequency deviation.

With reference to the first aspect, in some implementations of the first aspect, a period T in which a phase difference between the destination device and an adjacent upstream device of the destination device is generated is greater than the period of the overhead area that carries the phase difference information.

With reference to the first aspect, in some implementations of the first aspect, a frequency F of the reference clock of the second OTN frame is greater than or equal to a rate of the second OTN frame.

With reference to the first aspect, in some implementations of the first aspect, the frequency F and the period T satisfy: $(F*T*20ppm) < 10$ .

Based on the foregoing solution, the period T of the phase difference and/or the frequency F of the reference clock of the second OTN frame of each device are/is limited, so that an instantaneous phase error introduced in a phase difference accumulation process can be eliminated, thereby improving accuracy of phase difference information obtained by the destination device, improving accuracy of recovering the clock of the second OTN frame, and achieving an objective of improving system performance.

With reference to the first aspect, in some implementations of the first aspect, the period T is greater than 3 ms and less than 6 ms, for example, 4 ms. In some embodiments, the period T is a value close to 4 ms, to be specific, approximately equal to 4 ms, and may be slightly less than 4 ms or slightly greater than 4 ms. For example, the period T is 4.1 ms or 3.9 ms.

With reference to the first aspect, in some implementations of the first aspect, the frequency F ranges from 10 MHz to 1 GHz.

With reference to the first aspect, in some implementations of the first aspect, the period of the overhead area that carries the phase difference information is 3 ms. In some embodiments, the period of the overhead area that carries the phase difference information is a value close to 3 ms, to be specific, approximately equal to 3 ms, and may be slightly less than 3 ms or slightly greater than 3 ms, for example, 2.1 ms or 3.9 ms.

With reference to the first aspect, in some implementations of the first aspect, an error of the recovered server layer clock of the second OTN frame is less than or equal to 40 ns. Based on this solution, in the clock recovery solution provided in embodiments of this application, a phase error introduced in phase difference calculation can meet a G.813 template.

With reference to the first aspect, in some implementations of the first aspect, the phase difference information is carried in a plurality of overhead areas of the second OTN frame. Based on this solution, the overhead area of the second OTN frame is used to carry the phase difference information, so that the destination device can obtain the phase difference information in time after receiving the second OTN frame, to reduce a delay of clock recovery.

With reference to the first aspect, in some implementations of the first aspect, one byte of each of the plurality of overhead areas carries the phase difference information.

With reference to the first aspect, in some implementations of the first aspect, the second OTN frame is an optical service unit OSU frame.

With reference to the first aspect, in some implementations of the first aspect, the first OTN frame is an optical data unit ODU frame, and the ODU frame is an ODUk frame or an ODUflex frame.

With reference to the first aspect, in some implementations of the first aspect, the reference clock of the second OTN frame is generated by a constant-temperature crystal oscillator, and an amplitude at which a frequency of the reference clock of the second OTN frame changes with time is within a preset range. Based on this solution, the reference clock of the second OTN frame of each device is generated by the constant-temperature crystal oscillator, so that stability of the reference clock of the second OTN frame can be ensured, thereby improving accuracy of clock recovery and further improving system performance.

With reference to the first aspect, in some implementations of the first aspect, the adjusting reference clock of the second OTN frame based on the phase difference information includes: adjusting the reference clock of the second OTN frame in a time period $T_c$ based on the phase difference information, where $T_c$ satisfies: $T_c \geq T / (20ppm)$. Because the phase difference information received by the destination device is an accumulation result of phase differences between devices, a phase difference calculation error may occur when the phase difference between the adjacent devices is calculated in some devices. To eliminate an error that occurs when the device calculates the phase difference, when recovering the clock based on the phase difference information, the destination device does not perform instantaneous compensation, but performs, within the time period $T_c$, slow clock recovery by using all the phase difference information received within the time period $T_c$, to improve accuracy of clock recovery.

With reference to the first aspect, in some implementations of the first aspect, the method further includes: periodically increasing or decreasing the phase difference between the destination device and the adjacent upstream device of the destination device in a first period $T_1$, where the first period $T_1$ satisfies $T_1 = (F*T*T/D_1)$, and $D_1$ is the phase difference between the destination device and the adjacent upstream device of the destination device. Based on this solution, the destination device adjusts, in the first period, the phase difference generated by the device, so that a jitter of the phase difference can be reduced, thereby improving accuracy of clock recovery.

According to a second aspect, an embodiment of this application provides a method for clock recovery. The method may be performed by a first device or a component (such as a chip or a chip system) of the first device. This is not limited in this application. The method includes: receiving a first optical transport network OTN frame data stream; obtaining a server layer clock from the first OTN frame data stream; generating, based on the server layer clock, a phase difference between the first device and an adjacent upstream device of the first device; obtaining, from the first OTN frame data stream, first phase difference information carried in a second OTN frame carried in the first OTN frame data stream, where the first phase difference information is a sum of phase differences between one or more groups of two adjacent upstream devices in one or more upstream devices of the first device through which the second OTN frame passes, where the phase differences between the one or more groups of two adjacent upstream devices are an integer quantity of periods of a reference clock; generating second phase difference information, where the second phase difference information is a sum of the phase difference between the first device and the adjacent upstream device of the first device and the first phase difference information; and sending the second phase difference information, where the second phase difference information is used to adjust a reference clock of the second OTN frame, and the reference clock of the second OTN frame is used to recover a clock of the second OTN frame.

It should be noted that the first device is a device other than a sending device and a destination device. In other words, the first device is any intermediate device between the sending device and the destination device. It should be understood that when the first device is an adjacent downstream intermediate device of the sending device, because the sending device does not generate a phase difference, first phase difference information received by the first device is 0. In this case, a value of the second phase difference information sent by the first device corresponds to a phase difference that is between the first device and the sending device and that is generated by the first device.

It should be further noted that because devices for generating OTN frames are different, the second OTN frame that carries the first phase difference information and that is received by the first device is different from the second OTN frame that carries the second phase difference information and that is sent by the first device. However, it should be understood that an overhead area of the second OTN frame that carries the first phase difference information and an overhead area of the second OTN frame that carries the first phase difference information are located at same locations of the second OTN frames corresponding to the respective overhead areas. In other words, in embodiments of this application, a location of an overhead area that carries phase difference information in the second OTN frame is fixed. After extracting, in the overhead area, the first phase difference information sent by the upstream device, the first device records the second phase difference information generated by the first device in an overhead area at a same location of a new second OTN frame generated by the first device.

In some embodiments, a period of an overhead area that carries the first phase difference information is the same as a period of an overhead area that carries the second phase difference information of the second OTN frame, a period of an overhead area that carries the first phase difference information of the second OTN frame is less than or equal to 1/2 of a period of the second OTN frame, and a period of an overhead area that carries the second phase difference information of the second OTN frame is less than or equal to 1/2 of the period of the second OTN frame.

Based on this solution, the intermediate device calculates a phase difference between the device and an adjacent upstream device, accumulates the received first phase difference information and phase difference information generated by the device, to generate the second phase difference information used to recover the destination device, and sends the second phase difference information. In other words, the destination device adjusts a reference clock of the second OTN frame of the destination device by accumulating phase differences sent by an intermediate node, to avoid a process of extracting the reference clock of the second OTN frame of each device in the system, and reduce complexity and a high overhead of clock recovery. Because the accumulated phase differences can implement lossless estimation of the reference clock of the second OTN frame, this solution of this application can improve accuracy of adjusting the reference clock of the second OTN frame of the destination device, to improve accuracy of recovering the clock of the second OTN frame, and achieve an objective of improving system performance. With reference to the second aspect, in some implementations of the second aspect, a period T in which the phase difference between the first device and the adjacent upstream device of the first device is generated is greater than the period of the overhead area that carries the first the phase difference information or the second phase difference information.

With reference to the second aspect, in some implementations of the second aspect, a frequency F of the reference clock of the second OTN frame is greater than or equal to a rate of the second OTN frame.

With reference to the second aspect, in some implementations of the second aspect, the frequency F and the period T satisfy: $(F * T * 20\text{ppm}) < 10$ .

With reference to the second aspect, in some implementations of the second aspect, the period T is greater than 3 ms and less than 6 ms, for example, 4 ms. In some embodiments, the period T is a value close to 4 ms, to be specific, approximately equal to 4 ms, and may be slightly less than 4 ms or slightly greater than 4 ms. For example, the period T is 3.1 ms or 4.9 ms.

With reference to the second aspect, in some implementations of the second aspect, the frequency F ranges from 10 MHz to 1 GHz.

With reference to the second aspect, in some implementations of the second aspect, the period of the overhead area that carries the first phase difference information of the second OTN frame is 3 ms.

With reference to the second aspect, in some implementations of the second aspect, the period of the overhead area that carries the second phase difference information of the second OTN frame is 3 ms. In some embodiments, the period of the overhead area that carries the first phase difference information or the period of the overhead area that carries the second phase difference information is a value close to 3 ms, to be specific, approximately equal to 3 ms, and may be slightly less than 3 ms or slightly greater than 3 ms, for example, 2.1 ms or 3.9 ms.

With reference to the second aspect, in some implementations of the second aspect, the first phase difference information is carried in a plurality of overhead areas of the second OTN frame.

With reference to the second aspect, in some implementations of the second aspect, the second phase difference information is carried in a plurality of overhead areas of the second OTN frame.

With reference to the second aspect, in some implementations of the second aspect, one byte of each of the plurality of overhead areas carries the first phase difference information.

With reference to the second aspect, in some implementations of the second aspect, the second OTN frame is an optical service unit OSU frame.

With reference to the second aspect, in some implementations of the second aspect, the first OTN frame is an ODUk frame or an ODUflex frame.

With reference to the second aspect, in some implementations of the second aspect, the reference clock of the second OTN frame is generated by a constant-temperature crystal oscillator, and an amplitude at which a frequency of the reference clock of the second OTN frame changes with time is within a preset range.

With reference to the second aspect, in some implementations of the second aspect, the method further includes: periodically increasing or decreasing the phase difference between the first device and the adjacent upstream device of the first device in a second period $T_2$, where the second period $T_2$ satisfies $T_2 = (F * T * T/D_2)$, and $D_2$ is the phase difference between the first device and the adjacent upstream device of the first device. Based on this solution, the first device adjusts, in the second period, the phase difference generated by the device, so that a jitter of the phase difference can be reduced, thereby improving accuracy of clock recovery.

According to a third aspect, an embodiment of this application provides a method for clock recovery. The method may be performed by a destination device or a component (such as a chip or a chip system) of the destination device. This is not limited in this application. The method includes: receiving a first optical transport network OTN frame data stream; obtaining a server layer clock from the first OTN frame data stream; obtaining, from the first OTN frame data stream, first phase difference information carried in a second OTN frame carried in the first OTN frame data stream, where the first phase difference information is a sum of phase differences between one or more groups of two adjacent upstream devices in one or more upstream devices of the destination device through which the second OTN frame passes, and the phase differences between the one or more groups of two adjacent upstream devices are an integer quantity of periods of a nominal clock, where the period of the nominal clock is less than or equal to 10 ns; generating a local phase difference based on a reference clock of the second OTN frame of the destination device and the server layer clock; accumulating the local phase difference to the first phase difference information to generate second phase difference information, where the reference clock of the second OTN frame of the destination device is used to recover a clock of the second OTN frame; and adjusting the reference clock of the second OTN frame of the destination device based on the second phase difference information.

With reference to the third aspect, in some implementations of the third aspect, the adjusting the reference clock of the second OTN frame of the destination device based on the second phase difference information includes: generating a frequency deviation based on the second phase difference information, where the frequency deviation is a product of a quantity of nominal clocks corresponding to the second phase difference information and the nominal clock; and adjusting the reference clock of the local second OTN frame based on the frequency deviation.

With reference to the third aspect, in some implementations of the third aspect, the adjusting the reference clock of the local second OTN frame based on the second phase difference information includes: generating a clock control signal that adjusts the reference clock of the second OTN frame of the destination device based on the second phase difference information; and adjusting the reference clock of the local second OTN frame based on the clock control signal.

With reference to the third aspect, in some implementations of the third aspect, a period T in which the local phase difference is generated is greater than a period of an overhead area of the second OTN frame that carries the first phase difference information.

With reference to the third aspect, in some implementations of the third aspect, a frequency F of a nominal clock is greater than or equal to a rate of the second OTN frame.

With reference to the third aspect, in some implementations of the third aspect, the frequency F and the period T satisfy: $(F \times T \times 20 \ ppm) < 64$.

With reference to the third aspect, in some implementations of the third aspect, the period T is less than 6 ms, for example, 4 ms. In some embodiments, the period T is a value close to 4 ms, to be specific, approximately equal to 4 ms, and may be slightly less than 4 ms or slightly greater than 4 ms. For example, the period T is 3.1 ms or 4.9 ms.

With reference to the third aspect, in some implementations of the third aspect, the frequency F ranges from 100 MHz to 1 GHz.

With reference to the third aspect, in some implementations of the third aspect, a period of an overhead area of the second OTN frame that carries the first phase difference information is 3 ms.

In some embodiments, the period of the overhead area that carries the phase difference information is a value close to 3 ms, to be specific, approximately equal to 3 ms, and may be slightly less than 3 ms or slightly greater than 3 ms, for example, 2.1 ms or 3.9 ms.

With reference to the third aspect, in some implementations of the third aspect, an error of the recovered server layer clock of the second OTN frame is less than or equal to 100 ns.

With reference to the third aspect, in some implementations of the third aspect, the first phase difference information is carried in a plurality of overhead areas of the second OTN frame.

In some implementations, each of the plurality of overhead areas carries the same first phase difference information. When a bit error occurs in a system, an error may occur in the first phase difference information carried in some of the plurality of overhead areas. Therefore, in this solution, when the bit error occurs in the system, a receiving device can determine the correct first phase difference information based on a plurality of pieces of received phase difference information, to improve system performance.

In some other implementations, when first phase difference information generated by the upstream device exceeds a maximum capacity of a resource that carries the phase difference information, for example, when the resource that carries the phase difference information is one byte, and the first phase difference information cannot be carried by using one byte, the first phase difference information may be divided into a plurality of pieces of phase difference information, and carried in different overhead areas (for example, adjacent overhead areas), namely, a part of the first phase difference information carried in each of the plurality of overhead areas. In other words, the phase difference information carried in the plurality of overhead areas is generally the first phase difference information.

With reference to the third aspect, in some implementations of the third aspect, one byte of each of the plurality of overhead areas carries the first phase difference information.

With reference to the third aspect, in some implementations of the third aspect, a plurality of bytes of each of the plurality of overhead areas carry a plurality of pieces of first phase difference information. Based on this solution, a device that obtains the plurality of pieces of first phase difference information may determine correct first phase difference information by using an algorithm such as a majority decision algorithm, to improve system performance.

With reference to the third aspect, in some implementations of the third aspect, an amplitude at which a frequency of the reference clock of the second OTN frame of the destination device changes with time is within a range of $\pm 20$ ppm.

With reference to the third aspect, in some implementations of the third aspect, the adjusting the reference clock of the local second OTN frame based on the second phase difference information includes: adjusting the reference clock of the local second OTN frame within a time period $T_c$ based on the second phase difference information, where $T_c$ satisfies: $T_c \geq T / (20\text{ppm})$.

According to a fourth aspect, an embodiment of this application provides a method for clock recovery. The method may be performed by an intermediate device or a component (such as a chip or a chip system) of the intermediate device. This is not limited in this application. The method includes: receiving a first optical transport network OTN frame data stream; obtaining a server layer clock from the first OTN frame data stream; obtaining, from the first OTN frame data stream, first phase difference information carried in a second OTN frame carried in the first OTN frame data stream, where the first phase difference information is a sum of phase differences between one or more groups of two adjacent upstream devices in one or more upstream devices of the intermediate device through which the second OTN frame passes, and the phase differences between the one or more groups of two adjacent upstream devices are an integer quantity of periods of a nominal clock, where the period of the nominal clock is less than or equal to 10 ns; generating a local phase difference based on a clock of the intermediate device and the server layer clock; accumulating the local phase difference to the first phase difference information to generate second phase difference information; and sending the second phase difference information to an adjacent downstream device.

With reference to the fourth aspect, in some implementations of the fourth aspect, the method further includes: splitting the second phase difference information into a plurality of pieces of partial phase difference information when an absolute value of the second phase difference information is greater than a preset threshold, where the plurality of pieces of partial phase difference information are carried in the plurality of overhead areas of the second OTN frame that is sent by the intermediate device.

Based on the foregoing solution, second phase difference information generated by the intermediate device is split and then carried by at least two overhead areas. For example, when the second phase difference information exceeds one range (for example, one byte), the second phase difference information may be added to the plurality of overhead areas for a plurality of times, to ensure that each overhead area does not overflow, thereby reducing a jitter of the phase difference and improving accuracy of clock recovery.

According to a fifth aspect, an embodiment of this application provides a method for clock recovery. The method may be performed by an intermediate device or a component (such as a chip or a chip system) of the intermediate device. This is not limited in this application. The method includes: receiving a first optical transport network OTN frame data stream; obtaining a server layer clock from the first OTN frame data stream; obtaining, from the first OTN frame data stream, first phase difference information carried in a second OTN frame carried in the first OTN frame data stream, where the first phase difference information is a sum of phase differences between one or more groups of two adjacent upstream devices in one or more upstream devices of the intermediate device through which the second OTN frame passes, and the phase differences between the one or more groups of two adjacent upstream devices are an integer quantity of periods of a nominal clock, where the period of the nominal clock is less than or equal to 10 ns; generating a local phase difference based on a clock of the intermediate device and the server layer clock; generating first information, where the first information includes second phase difference information or fault information, the second phase difference information is generated by accumulating the local phase difference to the first phase difference information, the second phase difference information is used to adjust a reference clock of the second OTN frame, the reference clock of the second OTN frame is used to recover a clock of the second OTN frame, and the fault information indicates that a clock abnormality occurs in the intermediate device; and sending the first information to an adjacent downstream device.

Based on the foregoing solution, when a device in a system finds, when calculating phase difference information, that an upstream server layer clock is abnormal or a local clock of a local device is abnormal, the device does not generate new phase difference information, but sends the fault information to the downstream device, so that a destination device that finally receives the fault information does not perform clock recovery, to avoid a case such as a service sending failure caused by a clock recovery error, and improve system performance.

With reference to the fifth aspect, in some implementations of the fifth aspect, the generating a local phase difference based on a clock of the intermediate device and the server layer clock includes: when confirming that the first phase difference information is received, counting a period quantity N1 of a nominal clock corresponding to the clock of the intermediate device, and counting a period quantity N2 of a nominal clock corresponding to the server layer clock; and calculating a difference between N1 and N2 as the local phase difference.

With reference to the fifth aspect, in some implementations of the fifth aspect, the confirming that the first phase difference information is received is determined by identifying a frame header of the second OTN frame.

With reference to the fifth aspect, in some implementations of the fifth aspect, the generating a local phase difference based on a clock of the intermediate device and the server layer clock includes: determining, based on speeds of the clock of the intermediate device and the server layer clock, to use a faster clock, a slower clock, or an average clock as a reference clock; and generating the local phase difference based on the reference clock.

With reference to the fifth aspect, in some implementations of the fifth aspect, when a moment for triggering calculation of the local phase difference is met, a period quantity N1 of a nominal clock corresponding to the clock of the intermediate device and a period quantity N2 of a nominal clock corresponding to the server layer clock are counted, where the moment for triggering calculation of the local phase difference is a moment at which either of the period quantity of the nominal clock corresponding to the clock of the intermediate device and the period quantity of the nominal clock corresponding to the server layer clock is earlier equal to a preset expected period N, or the moment for triggering calculation of the local phase difference is a moment at which either of the period quantity of the nominal clock corresponding to the clock of the intermediate device and the period quantity of the nominal clock corresponding to the server layer clock is later equal to a preset expected period N, and the local phase difference is a difference between N1 and N2.

Based on the foregoing solution, when the local phase difference is calculated, the intermediate device can select a faster reference clock of the second OTN frame or a slower reference clock of the second OTN frame as a local reference clock by satisfying the moment for triggering calculation of the local phase difference, to improve accuracy of clock recovery.

With reference to the fifth aspect, in some implementations of the fifth aspect, $N = F \times T$, where F is a frequency of the nominal clock, and T is a period T in which the local phase difference is generated.

With reference to the fifth aspect, in some implementations of the fifth aspect, the method further includes: determining the nominal clock corresponding to the clock of the intermediate device as a reference clock based on a moment for triggering calculation of the local phase difference, where the reference clock is used to determine a detection period; or determining the nominal clock corresponding to the server layer clock as a reference clock based on a moment for triggering calculation of the local phase difference.

With reference to the fifth aspect, in some implementations of the fifth aspect, the method further includes: splitting the second phase difference information into a plurality of pieces of partial phase difference information when an absolute value of the second phase difference information is greater than a preset threshold, where the plurality of pieces of partial phase difference information are carried in a plurality of overhead areas of the second OTN frame sent by the intermediate device.

With reference to the fifth aspect, in some implementations of the fifth aspect, the method further includes:

obtaining a plurality of pieces of phase difference information carried by a plurality of bytes of each of the plurality of overhead areas of the second OTN frame; and obtaining the first phase difference information based on the plurality of pieces of phase difference information.

With reference to the fifth aspect, in some implementations of the fifth aspect, the generating fault information includes: counting a period quantity N1 of a nominal clock corresponding to the clock of the intermediate device; counting a period quantity N2 of a nominal clock corresponding to the server layer clock; and generating the fault information when N1 does not belong to a preset interval, and/or N2 does not belong to the preset interval.

With reference to the fifth aspect, in some implementations of the fifth aspect, the preset interval is [$N \times$ (1 - *20 ppm*), $N \times$ (1+20 *ppm*)].

With reference to the fifth aspect, in some implementations of the fifth aspect, the generating fault information includes: counting a period quantity N1 of a nominal clock corresponding to the clock of the intermediate device; counting a period quantity N2 of a nominal clock corresponding to the server layer clock; and generating the fault information when a difference between N1 and N2 is not equal to -1, 0, or 1 within preset time.

With reference to the fifth aspect, in some implementations of the fifth aspect, the preset time is $T_{\text{Nominal}} \times 1/(40$ *ppm*) or $T_{\text{Nominal}} \times 25000$, and $T_{\text{Nominal}}$ is the period of the nominal clock.

In some implementations, the fault information may be generated when the foregoing moment for triggering calculation of the local phase difference is met. In other words, when the moment for triggering calculation of the local phase difference is met, a value of N1 and a value of N2 are recorded, and the fault information is generated when it is determined that N1 does not belong to a preset interval, and/or N2 does not belong to a preset interval; and/or the fault information is generated when a difference between N1 and N2 is not equal to -1, 0, or 1 within preset time.

With reference to the fifth aspect, in some implementations of the fifth aspect, the first information is carried in the overhead area of the second OTN frame that is sent by the intermediate device, the first information occupies at least one byte, and at least one bit in the at least one byte indicates that information included in the first information is the second phase difference information or the fault information.

With reference to the fifth aspect, in some implementations of the fifth aspect, the first information includes the fault information, and the fault information includes a quantity of nodes between a faulty intermediate device and a destination device.

With reference to the fifth aspect, in some implementations of the fifth aspect, the quantity of nodes between the faulty intermediate device and the destination device is carried by at least five bits in at least one byte occupied by the first information.

According to a sixth aspect, an embodiment of this application provides a system for clock recovery. The system includes a sending device and a destination device. Alternatively, the system includes a sending device, a destination device, and at least one first device (also referred to as an intermediate device). An objective is to perform the method according to any one of the first aspect or the possible implementations thereof, or perform the method according to any one of the third aspect or the possible implementations thereof. The first device is configured to perform the method according to any one of the second aspect or the possible implementations thereof, or is configured to perform the method according to any one of the fourth aspect or the possible implementations thereof, or is configured to perform the method according to any one of the fifth aspect or the possible implementations thereof.

According to a seventh aspect, an embodiment of this application provides an optical transport network OTN apparatus. The apparatus is configured to perform the method provided in any one of the first aspect to the sixth aspect. Specifically, the optical transport network OTN apparatus may include units and/or modules configured to perform the method provided in any one of the first aspect or the foregoing implementations of the first aspect; the optical transport network OTN apparatus may include units and/or modules configured to perform the method provided in any one of the second aspect or the foregoing implementations of the second aspect, such as a processing module and a transceiver module; the optical transport network OTN apparatus may include units and/or modules configured to perform the method provided in any one of the third aspect or the foregoing implementations of the third aspect, such as a processing module and a transceiver module; the optical transport network OTN apparatus may include units and/or modules configured to perform the method provided in any one of the fourth aspect or the foregoing implementations of the fourth aspect, such as a processing module and a transceiver module; or the optical transport network OTN apparatus may include units and/or modules configured to perform the method provided in any one of the fifth aspect or the foregoing implementations of the fifth aspect, such as a processing module and a transceiver module.

In an implementation, the optical transport network OTN apparatus may include units and/or modules configured to perform the method provided in any one of the first aspect or the foregoing implementations of the first aspect, or units and/or modules configured to perform the method provided in any one of the third aspect or the foregoing implementations of the third aspect, and is a receiving end device. The transceiver module may be a transceiver or an input/output interface. The processing module may be at least one processor. Optionally, the transceiver may be a transceiver circuit. Optionally, the input/output interface may be an input/output circuit.

Alternatively, the optical transport network OTN apparatus is a chip, a chip system, or a circuit in the receiving end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

In another implementation, the optical transport network OTN apparatus may include units and/or modules configured to perform the method provided in any one of the second aspect or the foregoing implementations of the second aspect, or units and/or modules configured to perform the method provided in any one of the fourth aspect or the foregoing implementations of the fourth aspect, or units and/or modules configured to perform the method provided in any one of the fifth aspect or the foregoing implementations of the fifth aspect, and is a transmitting end device. The transceiver module may be a transceiver or an input/output interface. The processing module may be at least one processor. Optionally, the transceiver may be a transceiver circuit. Optionally, the input/output interface may be an input/output circuit.

Alternatively, the optical transport network OTN apparatus is a chip, a chip system, or a circuit in the transmitting end device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to an eighth aspect, an embodiment of this application provides a processor, configured to perform the methods provided in the foregoing aspects. Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, an embodiment of this application provides a computer-readable storage medium. The computer-readable storage medium stores program code executed by a device, and the program code is used to perform the method provided in any one of the first aspect, the second aspect, the third aspect, the fourth aspect, or the fifth aspect or the implementations thereof.

According to a tenth aspect, an embodiment of this application provides a computer program product including instructions. When the computer program product runs on a computer, the computer is enabled to perform the method provided in any one of the first aspect, the second aspect, the third aspect, the fourth aspect, or the fifth aspect or the implementations thereof.

According to an eleventh aspect, an embodiment of this application provides a chip. The chip includes a processor and a communication interface. The processor reads, through the communication interface, instructions stored in a memory, to perform the method provided in any one of the first aspect, the second aspect, the third aspect, the fourth aspect, or the fifth aspect or the implementations thereof.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the first aspect, the second aspect, the third aspect, the fourth aspect, or the fifth aspect or the implementations thereof.

For beneficial effects brought by the third aspect to the eleventh aspect, refer to descriptions of beneficial effects in the first aspect, the second aspect, or the fifth aspect. Details are not described herein again.

**BRIEF DESCRIPTION OF DRAWINGS**

FIG. 1 is a diagram of an OTN optical network system to which an embodiment of this application is applicable;

FIG. 2 is a diagram of a hardware structure of a possible network device;

FIG. 3 is a diagram of a frame structure of an OTN frame applicable to an embodiment of this application;

FIG. 4 is a schematic flowchart of a method 400 for clock recovery according to an embodiment of this application;

FIG. 5 is a diagram of a mapping relationship between a first OTN frame and a second OTN frame applicable to an embodiment of this application;

FIG. 6 is a diagram of calculating a phase difference between two adjacent devices according to an embodiment of this application;

FIG. 7 is a diagram of a 1st second OTN frame structure according to an embodiment of this application;

FIG. 8 is a diagram of a 2nd second OTN frame structure according to an embodiment of this application;

FIG. 9 is a diagram of a 3rd second OTN frame structure according to an embodiment of this application;

FIG. 10 is a schematic flowchart of generating a frequency deviation by a destination device according to an embodiment of this application;

FIG. 11 is a diagram in which phase difference information fluctuates with time according to an embodiment of this application;

FIG. 12 is a diagram of phase difference information received by a destination device under a constraint condition according to an embodiment of this application;

FIG. 13 is a diagram of a calculation procedure of a first frequency deviation calculation module 1021;

FIG. 14 is a diagram of a calculation procedure of a second frequency deviation calculation module 1022;

FIG. 15A and FIG. 15B are schematic flowcharts of a method 1500 for clock recovery according to an embodiment of this application;

FIG. 16 is a diagram of a processing procedure of an intermediate device according to an embodiment of this application;

FIG. 17 is a diagram of a processing procedure of a destination device according to an embodiment of this application;

FIG. 18 is a schematic flowchart of a method 1800 for clock recovery according to an embodiment of this application;

FIG. 19 is a diagram of a structure of first information when first information occupies one byte;

FIG. 20 is a schematic flowchart of a method 2000 for clock recovery according to an embodiment of this application;

FIG. 21 is a first schematic flowchart of calculating a phase difference;

FIG. 22 is a second schematic flowchart of calculating a phase difference;

FIG. 23 shows a simulation comparison result of using a local clock as a reference clock by all intermediate devices and using a unified faster or slower clock as a reference clock according to an embodiment of this application;

FIG. 24 shows a simulation comparison result of using a local clock as a reference clock by all intermediate devices and using a unified faster or slower clock as a reference clock according to an embodiment of this application;

FIG. 25 shows a simulation result of using a unified faster or slower clock as a reference clock when intermediate devices are all in an extreme frequency deviation ($\pm$20 ppm);

FIG. 26 is a diagram of a structure of an OTN apparatus 1500 according to an embodiment of this application;

FIG. 27 is a diagram of a structure of a possible OTN device according to an embodiment of this application;

FIG. 28 is a third schematic flowchart of calculating a phase difference according to an embodiment of this application;

FIG. 29 shows three possible types of moments for triggering calculation of a local phase difference in FIG. 28;

FIG. 30 is a fourth schematic flowchart of calculating a phase difference according to an embodiment of this application; and

FIG. 31 shows clock performance obtained through simulation for an intermediate device by using a solution of performing phase difference calculation when it is confirmed that first phase difference information is received.

**DESCRIPTION OF EMBODIMENTS**

The following describes a technical solution of this application with reference to accompanying drawings.

For ease of understanding embodiments of this application, the following descriptions are provided.

First, in the following text descriptions or accompanying drawings in embodiments of this application, terms such as "first", "second", and the like, and various numbers are merely used for differentiation for ease of description, do not need to be used to describe a specific order or sequence, and are not used to limit the scope of embodiments of this application. For example, different phase difference information is distinguished.

Second, in the following embodiments of this application, the terms "include" and any other variants mean to cover the non-exclusive inclusion, for example, a process, method, system, product, or device that includes a series of steps or units is not necessarily limited to those clearly listed steps or units, but may include another inherent step or unit not clearly listed or inherent to such a process, method, product, or device.

Third, in embodiments of this application, the term such as "example", "for example", or the like is used to represent an example, an illustration, or a description. Any embodiment or design scheme described with "example" or "for example" should not be explained as being more preferred or having more advantages than another embodiment or design scheme. A word such as "example" or "for example" is used to present a related concept in a specific manner for ease of understanding.

Fourth, in embodiments of this application, service data is a service that can be carried by an optical transport network. For example, the service may be an Ethernet service, a packet service, or a wireless backhaul service. The service data may also be referred to as a service signal, client data, or client service data. It should be understood that a type of the service data is not limited in embodiments of this application.

Fifth, in this application, "indicate" includes directly indicating and indirectly indicating. When a piece of information is described as indicating A, the information directly indicates A or indirectly indicates A, but it does not indicate that the information definitely carries A.

Sixth, in the following embodiments of this application, only an OTN frame in an optical transport network (optical transport network, OTN) is used as an example to describe the embodiments. It should be understood that another bearer OTN frame, or a metro transport network (metro transport network, MTN) frame, or a new type of OTN frame and an MTN frame that may be defined with development of an OTN technology and an MTN technology are also applicable to this application.

Seventh, in embodiments of this application, a device may also be referred to as a node or a node device, and a sending device may be referred to as a sending node, a transmitting end, or a source node. Similarly, a receiving device may be referred to as a receiving end device, a receiving end, a destination device, or a sink node. An intermediate device may be referred to as an intermediate node.

Eighth, in embodiments of this application, "at least one" means one or more, and "a plurality of" means two or more. "And/or" describes an association relationship between associated objects, and indicates that three relationships may exist. For example, A and/or B may represent the following cases: A exists alone, both A and B exist, and B exists alone, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, and c may indicate a, or b, or c, or a and b, or a and c, or b and c, or a, b, and c, where a, b, and c may be singular or plural.

Ninth, in embodiments of this application, "preset" may include predefined, for example, defined in a protocol. The "predefined" may be implemented by saving in advance, in the device, corresponding code, a table, or another format that may be used to indicate related information. A specific implementation of the "predefined" is not limited in this application.

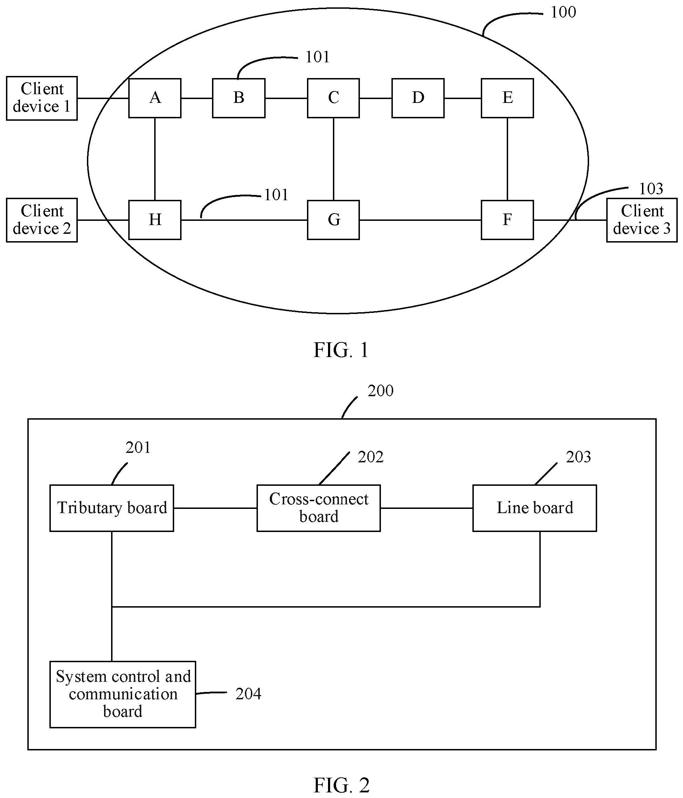

FIG. 1 is a diagram of an OTN optical network system to which an embodiment of this application is applicable. An OTN optical network is usually formed by connecting a plurality of devices through optical fibers and may be formed into different types of topologies such as linear, ring, and mesh topologies as required. The OTN 100 shown in FIG. 1 includes eight OTN devices 101, namely, a device A to a device H. 102 denotes an optical fiber, and is configured to connect two devices. 103 denotes a client service interface, and is configured to receive or send client service data. As shown in FIG. 1, the OTN 100 is configured to transmit service data for a client device 1 to a client device 3. The client device is connected to the OTN device through the client service interface. For example, in FIG. 1, the client device 1 to the client device 3 are respectively connected to the OTN device A, the OTN device H, and the OTN device F. In FIG. 1, when the client device 1 needs to communicate with the client device 3, the client device 1 may send the service data by using the OTN device A to the OTN device F. For example, the OTN device A is a sending device, the OTN device B to the OTN device E are intermediate devices, and the OTN device F is a receiving device.

Usually, the OTN device includes an optical layer device, an electrical layer device, and a photoelectric hybrid device. The optical layer device is a device that can process an optical layer signal, for example, an optical amplifier (also referred to as an optical line amplifier) or an optical add/drop multiplexer. The optical amplifier is configured to amplify an optical signal, to support a longer transmission distance while ensuring specific performance of the optical signal. The optical add/drop multiplexer is configured to perform space transformation on the optical signal, so that the optical signal can be output from different output ports (sometimes referred to as directions). The electrical layer device is a device that can process an electrical layer signal, for example, a device that can process an OTN signal. The photoelectric hybrid device is a device that has a capability of processing an optical layer signal and an electrical layer signal. It should be noted that one OTN device may integrate a plurality of different functions based on a specific integration requirement. A technical solution provided in this application is applicable to OTN devices that have different forms and degrees of integration and that include an electrical layer function.

It should be noted that a data frame structure used by an OTN device in embodiments of this application is an OTN frame, which is used to carry various service data and provide rich management and monitoring functions. The OTN frame may be an optical data unit frame (optical data unit k, ODUk), an ODUCn, an ODUflex, an optical channel transport unit k (optical transport unit k, OTUk), an OTUCn, a flexible OTN (FlexO) frame, or the like. A difference between an ODU frame and an OTU frame lies in that the OTU frame includes the ODU frame and an OTU overhead. k represents different rate levels. For example, k=1 represents 2.5 Gbps, k=4 represents 100 Gbps. Cn represents a variable rate, which is specifically a rate that is a positive integer multiple of 100 Gbps. Unless otherwise specified, the ODU frame is any one of the ODUk frame, the ODUCn frame, or the ODUflex frame, and the OTU frame is any one of the OTUk frame, the OTUCn frame, or the FlexO frame. With development of OTN technologies, a new type of OTN frame may be defined, which is also applicable to this application.

FIG. 2 is a diagram of a hardware structure of a possible network device. For example, the network device is the device A in FIG. 1. Specifically, an OTN device 200 includes a tributary board 201, a cross-connect board 202, a line board 203, an optical layer processing board (not shown in FIG. 2), and a system control and communication board 204. According to requirements, types and quantities of boards included in a network device may be different. For example, a network device serving as a core node includes no tributary board 201. For another example, a network device serving as an edge node includes a plurality of tributary boards 201, or includes no optical cross-connect board 202. For still another example, a network device supporting only an electrical layer function may include no optical layer processing board.

The tributary board 201, the cross-connect board 202, and the line board 203 are configured to process an electrical layer signal of an OTN. The tributary board 201 is configured to receive and send various client services such as an SDH service, a packet service, an Ethernet service, and a forward service. Further, the tributary board 201 may be divided into an optical transceiver module on a client side and a signal processor. The optical transceiver module on the client side may also be referred to as an optical transceiver, and is configured to receive and/or send service data. The signal processor is configured to map service data to a data frame and demap the service data from the data frame. The cross-connect board 202 is configured to exchange data frames, to complete exchanging one or more types of data frames. The line board 203 mainly processes a data frame on a line side. Specifically, the line board 203 may be divided into an optical module on the line side and a signal processor. The optical module on the line side may be referred to as an optical transceiver, and is configured to receive and/or send a data frame. The signal processor is configured to multiplex and demultiplex a data frame on the line side, or map and demap a data frame on the line side. The system control and communication board 204 is configured to implement system control. Specifically, the system control and communication board 204 may collect information from different boards or send a control instruction to a corresponding board. It should be noted that unless otherwise specified, there may be one or more specific components (for example, signal processors). This is not limited in this application. It should be further noted that a type of a board included in the device, a function design of the board, and a quantity of boards are not limited in this application. It should be noted that during specific implementation, two boards mentioned above may be designed as one board. In addition, the network device may further include a standby power supply, a heat dissipation fan, and the like.

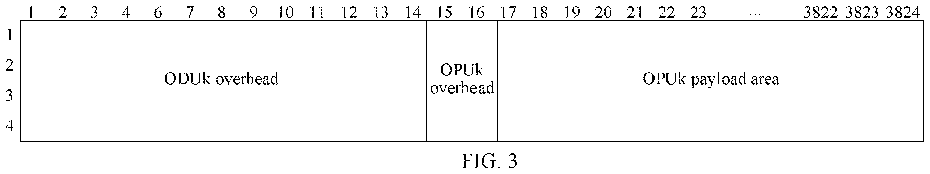

FIG. 3 is a diagram of a frame structure of an OTN frame applicable to an embodiment of this application. As shown in FIG. 3, an OTN frame is a frame structure of four rows and a plurality of columns, and includes an overhead area and a payload area. In a possible instance, the payload area of the OTN frame is divided into a plurality of payload blocks (payload blocks, PBs). Each PB occupies a position of a fixed length (which may also be referred to as a size) in the payload area, for example, 128 bytes. In the OTN frame structure shown in FIG. 3, the first 4 rows*16 columns are overhead areas (used to carry ODUk overheads, OPU overheads, and the like) of an OTU/ODU/optical payload unit (optical payload unit, OPU), and the remaining is an OPU payload area. Specifically, for the OTN frame structure, refer to related descriptions in a current protocol. Details are not described herein again.

As one of the key technologies in an OTN technology, an optical service unit (optical service unit, OSU) is mainly used to carry client services at a rate of 10 Mbps to 100 Gbps. A signal of a low-speed small-granularity service is carried by using the OSU and then the OSU is mapped to an ODUk/ODUflex to reduce a transmission delay of a service. This resolves a problem of low efficiency of carrying the signal of the low-speed small-granularity service in the original OTN technology. In an OTN system, recovering correct server layer clock information by a destination device depends on a correct mapping and demapping process between an OTN data frame and a service. In addition, division of the low-speed small-granularity service enables a quantity of ports that carry services in the OTN system to increase sharply, and if each intermediate device directly recovers service data loaded in each OSU data frame and regenerates clock information corresponding to the device, the process introduces extremely high processing complexity and huge overheads. Therefore, simplifying clock recovery of an OSU service is a technical problem that needs to be resolved.

To resolve the foregoing problem, this application provides a method for clock recovery. Phase difference information obtained by accumulating phase differences (phase differences, PDs) generated between adjacent devices is accumulated, so that the destination device recovers a clock of the OTN frame by using the phase difference information. The method avoids a process of extracting clock information of each device in a communication link, simplifies a processing procedure of clock recovery, and implements high-reliability clock recovery.

The following describes in detail a method for clock recovery provided in this application with reference to the accompanying drawings.

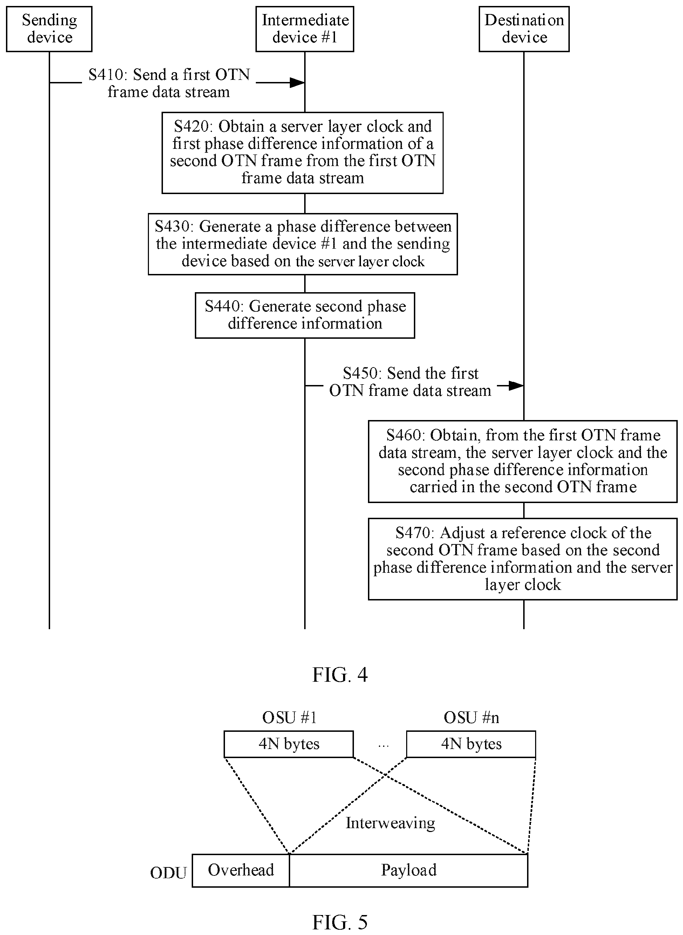

FIG. 4 is a schematic flowchart of a method 400 for clock recovery according to an embodiment of this application. As shown in FIG. 4, the method 400 is a schematic flowchart shown from a perspective of device interaction. A sending device may be an OTN device, or may be performed by a component (such as a chip or a chip system) of the OTN device. A receiving device may be the OTN device, or may be performed by a component (such as a chip or a chip system) of the OTN device.

It should be understood that in the method for clock recovery provided in this embodiment, there may be one or more intermediate devices. Certainly, in some scenarios, there may be no intermediate device. For ease of description, the following describes a procedure of the method for clock recovery provided in this embodiment of this application by using one intermediate device (namely, an intermediate device #1) as an example.

Specifically, the method 400 shown in FIG. 4 includes the following plurality of steps.

S410: The sending device sends a first OTN frame data stream.

Specifically, when the sending device needs to transmit service data to a destination device, the sending device sends the first OTN frame data stream to the destination device. The first OTN frame data stream carries first phase difference information carried in a second OTN frame. The first OTN frame data stream means that a frame format of the data stream is an OTN frame format.

For example, the first OTN frame is an ODU frame, for example, may be an ODUk frame or an ODUflex frame. The second OTN frame is an OSU frame. As shown in FIG. 5, n OSU frames are mapped to a payload area of one ODU frame in an interleaved manner. When each OSU frame includes 4N bytes, any slot of the ODU frame is used to carry a part of information of the n OSU frames. For example, a $1^{st}$ slot of the ODU frame may be used to carry information carried by a first byte of each of the n OSU frames. Information carried in each byte of the OSU frame may be service data or padding.

It should be noted that in embodiments of this application, phase difference information (including first phase difference information and second phase difference information below) carried in the second OTN frame is a sum of phase differences between one or more groups of two adjacent devices in all devices through which the second OTN frame passes.

In a possible implementation, a phase difference between two adjacent devices (descriptions are provided below by using a first device and a second device as an example, where the first device is an adjacent upstream device of the second device) is obtained by performing subtraction between period quantities of reference clocks of second OTN frames of the two adjacent devices. It should be understood that when the phase difference is obtained in this manner, the phase difference is an integer, indicating an integer quantity of periods by which the reference clocks of the second OTN frames of the two adjacent devices deviate from each other, and may be a positive integer, a negative integer, or 0. For example, when the second device calculates the phase difference between the second device and the first device, the second device may obtain the phase difference by obtaining a period quantity of the reference clock of the second OTN frame of the first device and a period quantity of the reference clock of the local second OTN frame, and performing subtraction between the period quantity of the reference clock of the second OTN frame of the first device and the period quantity of the reference clock of the local second OTN frame.

It should be noted that in embodiments of this application, a frequency interval used for calculating the period quantity of the reference clock of the second OTN frame is referred to as a nominal clock, namely, a frequency at which the reference clock of the second OTN frame passes each time the period quantity of the reference clock of the second OTN frame increases by 1. For example, the nominal clock may be 10 MHz, 78.125 MHz, 100 MHz, 300 MHz, or the like. It should be understood that for each device, the nominal clock is the same.

For example, the reference clock of the second OTN frame of the first device that is obtained by the second device is obtained by dividing a server layer clock by a fixed ratio X. The fixed ratio X may be preset in each device, and is also the same for each device. In other words, for each device, a ratio of the server layer clock corresponding to the first OTN frame data stream sent by the device to the reference clock of the local second OTN frame is the same fixed ratio, that is, the ratio is a direct proportion. Therefore, after receiving the first OTN frame data stream from the first device, the second device may obtain the server layer clock based on the first OTN frame data stream, and may obtain the reference clock of the second OTN frame of the first device by dividing the obtained server layer clock by the fixed ratio X. The reference clock of the second OTN frame of the second device obtained by the second device may be a local crystal oscillator clock or obtained by a ratio of the local crystal oscillator clock to a fixed ratio Y. For example, when the local crystal oscillator clock and the reference clock of the second OTN frame have a same order of magnitude, the reference clock of the second OTN frame of the second device obtained by the second device may be the local crystal oscillator clock. It should be understood that because a phase difference between adjacent devices is obtained by performing subtraction between period quantities of reference clocks of the adjacent devices, reference clocks of second OTN frames of the adjacent devices are of a same order of magnitude, for example, are of a same order of magnitude as the nominal clock. In this case, the fixed ratio X may be obtained by using a ratio relationship between the server layer clock and the nominal clock. Similarly, the fixed ratio Y may be obtained by using a ratio relationship between the local crystal oscillator clock of the second device and the nominal clock.

It should be noted that the server layer clock corresponding to the first OTN frame data stream refers to a sending period or a sending frequency of the first OTN frame data stream.

It should be understood that server layer clocks of first OTN frame data streams corresponding to first OTN frames at different rates are different. Therefore, when a ratio to the reference clock of the same locally configured second OTN frame is calculated, different fixed multiples are generated.

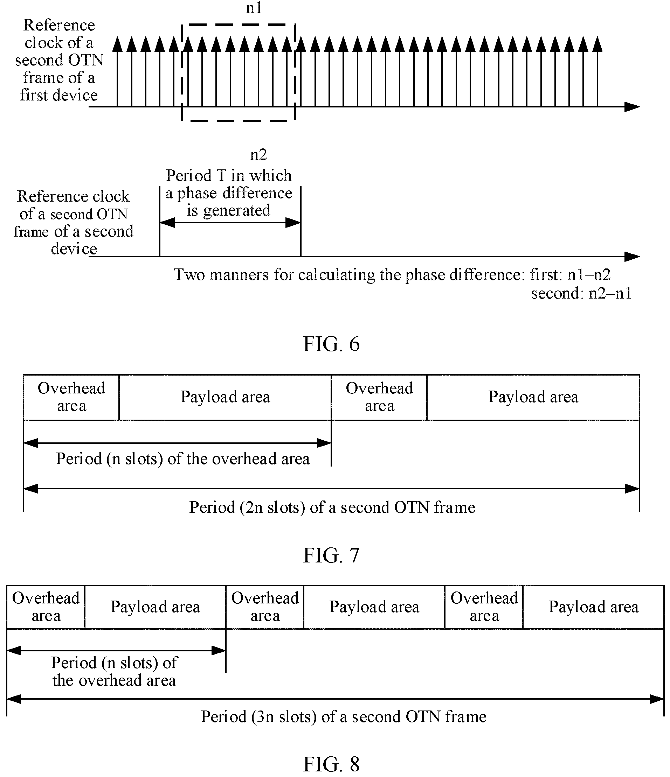

It should be understood that the period quantity of the reference clock of the second OTN frame of the first device and the period quantity of the reference clock of the second OTN frame of the second device are calculated based on same preset time. For example, as shown in FIG. 6, after obtaining a server layer clock, a second device calculates a period quantity n1 of a reference clock of a second OTN frame of a first device within preset time; and in addition, calculates a period quantity n2 of a reference clock of a local second OTN frame within same time, and then performs subtraction between n1 and n2 to obtain a phase difference between the second device and the first device. The phase difference between the second device and the first device may be n1-n2 or n2-n1. This is not limited in this application.

However, it should be understood that for any device through which the second OTN frame passes, a calculation rule of a phase difference is uniform. In other words, when calculating a phase difference between a device and an adjacent upstream device, each device subtracts a period quantity of a reference clock of a second OTN frame of the adjacent upstream device from a period quantity of a reference clock of a second OTN frame of the device. Alternatively, when calculating a phase difference between a device and an adjacent upstream device, each device subtracts a period quantity of a reference clock of a second OTN frame of the device from a period quantity of a reference clock of a second OTN frame of the adjacent upstream device.

It should be noted that the preset time may be understood as a period T in which the second device generates the phase difference between the second device and the first device or a period T in which the second device calculates the phase difference, and may be referred to as a phase difference calculation period T or a phase difference generation period T. In other words, the second device generates or calculates the phase difference once at intervals of one period T.

In addition, it should be further noted that to ensure that a frequency of a reference clock of a second OTN frame of each device is stable, in embodiments of this application, the reference clock of the second OTN frame of each device is generated by a constant-temperature crystal oscillator. It should be understood that that the frequency of the reference clock of the second OTN frame that is generated by using the constant-temperature crystal oscillator is a stable frequency means that an amplitude at which the frequency of the reference clock of the second OTN frame that is generated by using the constant-temperature crystal oscillator changes with time is within a preset range.

Optionally, phase difference information carried in the second OTN frame is carried in an overhead area of the second OTN frame. For example, when the second OTN frame is an OSU frame, the phase difference information is carried in an overhead area of the OSU frame, and occupies at least one byte in the overhead area of the OSU frame. For example, the phase difference information may be carried in a rate justification control (justification control, JC) overhead in the OSU frame, and occupies one or more bytes of the JC overhead.

It should be understood that when the phase difference information carried in the second OTN frame occupies a plurality of bytes, the plurality of bytes carry same phase difference information, and the plurality of bytes may be a plurality of consecutive bytes or a plurality of non-consecutive bytes. In some embodiments, when the phase difference information carried in the second OTN frame occupies the plurality of bytes, a receiving device may determine, based on the plurality of pieces of phase difference information, phase difference information sent by the upstream device by using an algorithm such as a majority decision algorithm. By using this solution, the phase difference information can be corrected when a bit error occurs in a system, to improve bit error resilience performance of the system.

It should be understood that because the sending device is a device that sends a first OTN frame data stream, the sending device does not generate the phase difference. Correspondingly, the overhead area used to carry the phase difference information in the second OTN frame does not carry any information. In other words, when the sending device sends a first OTN frame, first phase difference information carried in the first OTN frame may be understood as 0.

In some embodiments, a period of an overhead area that carries the phase difference information carried in the second OTN frame is less than or equal to 1/2 of a period of the second OTN frame. For example, the period of the overhead area that carries the phase difference information carried in the second OTN frame may be 1/2, 1/3, 1/4, or the like of the period of the second OTN frame. This is not limited in this application. In other words, in one second OTN frame, there may be a plurality of non-consecutive overhead areas used to carry phase difference information, and a time interval between two adjacent overhead areas may be referred to as one period of the overhead area. The period of the overhead area that carries the phase difference information carried in the second OTN frame may be referred to as a period of the overhead area of the second OTN frame or a period of the phase difference information. It may be understood as a period or the like in which a device for obtaining the phase difference information carried in the second OTN frame obtains, from the overhead area of the second OTN frame, the phase difference information carried in the second OTN frame.

FIG. 7 is a diagram of a 1st second OTN frame structure according to an embodiment of this application. A period of an overhead area of a second OTN frame is equal to 1/2 of a period of the second OTN frame. As shown in FIG. 7, a sending period of the second OTN frame is 2n slots. After a first overhead area is sent in the second OTN frame, a second overhead area is sent after n slots. It should be understood that, that the sending period of the second OTN frame shown in FIG. 7 includes two overhead areas is merely an example instead of a limitation. In other words, a quantity of overhead areas included in the sending period of the second OTN frame is not limited in this application.

FIG. 8 is a diagram of a 2nd second OTN frame structure according to an embodiment of this application. A period of an overhead area of a second OTN frame is equal to 1/3 of a period of the second OTN frame. As shown in FIG. 8, a sending period of the second OTN frame is 3n slots. After a first overhead area is sent in the second OTN frame, a second overhead area is sent after n slots. It should be understood that a quantity of overhead areas included in the sending period of the second OTN frame shown in FIG. 8 is merely an example instead of a limitation.

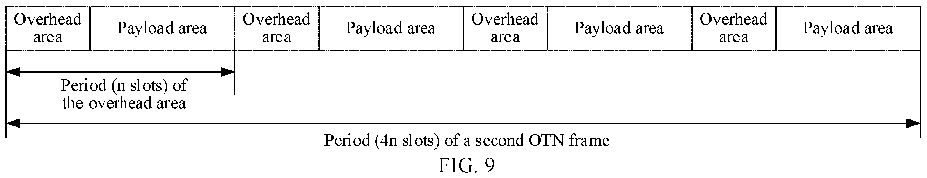

FIG. 9 is a diagram of a 3rd second OTN frame structure according to an embodiment of this application. A period of an overhead area of a second OTN frame is equal to 1/4 of a period of the second OTN frame. As shown in FIG. 9, a sending period of the second OTN frame is 4n slots. After a first overhead area is sent in the second OTN frame, a second overhead area is sent after n slots. It should be understood that a quantity of overhead areas included in the sending period of the second OTN frame shown in FIG. 9 is merely an example instead of a limitation.

In addition, in embodiments of this application, service data is a service that can be carried by an OTN, including but not limited to a constant bit rate (constant bit rate, CBR) service, a variable bit rate (variable bit rate, VBR) service, and the like. A CBR is performing encoding in a constant bit rate manner. By way of example and not limitation, the CBR service may include but is not limited to a multimedia streaming service, for example, a video streaming service, a virtual reality (virtual reality, VR) service, an augmented reality (augmented reality, AR) service, or the like. A VBR is a bit rate determined to be used in real time based on complexity of the service data. By way of example instead of limitation, the VBR service may include a voice service and/or a video service, or the like.

S420: An intermediate device #1 obtains a server layer clock and first phase difference information of a second OTN frame from the first OTN frame data stream.

Specifically, after receiving the first OTN frame data stream, the intermediate device #1 obtains a server layer clock from a sending device from a payload area of a first OTN frame, obtains the second OTN frame through demapping, and obtains, from the overhead area of the second OTN frame, first phase difference information sent by the sending device, where the first phase difference information is 0.

Specifically, the foregoing server layer clock may be that the sending device reads a service data stream based on the server layer clock at the sending device, and then encapsulates the read service data stream into a payload area of an OTN frame based on the server layer clock. After receiving the first OTN frame data stream, the intermediate device #1 obtains the server layer clock from the first OTN frame.

It should be understood that when there are a plurality of intermediate devices in a system, for another intermediate device, for example, an intermediate device #N (N is not equal to 1), a first OTN frame data stream received by the intermediate device #N is from an adjacent upstream intermediate device of the intermediate device #N. In this case, the intermediate device #N obtains a server layer clock sent by the adjacent upstream device of the intermediate device #N, and obtains phase difference information of the second OTN frame. The phase difference information of the second OTN frame obtained by the intermediate device #N is a sum of phase differences between one or more groups of two adjacent upstream devices in one or more upstream devices of the upstream device of the intermediate device #N. For example, when the intermediate device #N is an intermediate device #3, in this case, the intermediate device #1 and an intermediate device #2 further exist between the sending device and the intermediate device #3. Therefore, the first OTN frame data stream received by the intermediate device #3 is from the intermediate device #2. In addition, the obtained server layer clock is a server layer clock sent by the intermediate device #2. Phase difference information obtained by the intermediate device #3 is a sum of a phase difference between the intermediate device #1 and the sending device and a phase difference between the intermediate device #2 and the intermediate device #1.

S430: The intermediate device #1 generates the phase difference between the intermediate device #1 and the sending device based on the server layer clock.

Specifically, the intermediate device #1 calculates a reference clock of a second OTN frame of the sending device based on the server layer clock, and generates a phase difference by using the reference clock of the second OTN frame of the sending device and a reference clock of a local second OTN frame. For the method for generating the phase difference, refer to the related descriptions in S410. For example, the phase difference between the intermediate device #1 and the sending device is calculated by using a difference between period quantities.

It should be understood that when a plurality of intermediate devices exist in the system, for another intermediate device #N (N is not equal to 1), when calculating a phase difference between the intermediate device #N and the adjacent upstream device of the intermediate device #N, the intermediate device #N also calculates the reference clock of the second OTN frame of the adjacent upstream device based on the server layer clock, and calculates the phase difference by using a difference between period quantities of the reference clocks.

S440: The intermediate device #1 generates second phase difference information.

Specifically, after obtaining the first phase difference information, and calculating the phase difference between the intermediate device #1 and the sending device, the intermediate device #1 adds the first phase difference information and the phase difference between the intermediate device #1 and the sending device to obtain the second phase difference information.

It should be understood that when the first phase difference information is carried in the overhead area of the second OTN frame, the second phase difference information generated by the intermediate device #1 is also carried in the overhead area of the second OTN frame.

It should be further understood that when there are a plurality of intermediate devices in a network, for another intermediate device #N (N is not equal to 1), after calculating the phase difference between the intermediate device #N and the adjacent upstream device of the intermediate device #N, the intermediate device #N adds the phase difference to the phase difference information obtained from the first OTN frame data stream to obtain new phase difference information, and sends the second OTN frame including the new phase difference information (for example, carried in the overhead area of the second OTN frame) to a downstream device of the intermediate device #N.

S450: The intermediate device #1 sends the first OTN frame data stream.

Specifically, when generating the second phase difference information, the intermediate device #1 includes the second phase difference information in the second OTN frame, maps the second OTN frame to the first OTN frame, and sends the first OTN frame data stream to a destination device (namely, a downstream device of the first intermediate device #1).

It should be noted that because the intermediate device #1 processes information carried in the first OTN frame data stream, for example, the phase difference information that is carried in the second OTN frame carried in the first OTN frame data stream sent by the intermediate device #1 is phase difference information obtained by updating the phase difference information that is carried in the second OTN frame and that is carried in the first OTN frame data stream sent by the sending device in S410, data content carried in the first OTN frame data stream sent by the intermediate device #1 is different from data content carried in the first OTN frame data stream sent by the sending device, but corresponding frame formats of the first OTN frames are the same. Similarly, the second OTN frame that carries the first phase difference information is different from the second OTN frame that carries the second phase difference information, but frame formats are the same, and both are second OTN frame formats.

It should be understood that when the second phase difference information is carried in the overhead area of the second OTN frame, a period of the overhead area that carries the second phase difference information of the second OTN frame is less than or equal to 1/2 of the period of the second OTN frame.

After the destination device receives the first OTN frame data stream from the intermediate device #1, the destination device adjusts the reference clock of the second OTN frame based on the second phase difference information obtained from the first OTN frame data stream and the server layer clock obtained from the first OTN data stream.

S460: The destination device obtains the server layer clock and the second phase difference information of the second OTN frame from the first OTN frame data stream.

Specifically, after receiving the first OTN frame data stream sent by the intermediate device #1, the destination device obtains the server layer clock from the first OTN frame data stream, obtains the second OTN frame through demapping, and obtains the second phase difference information from the second OTN frame (for example, the overhead area of the second OTN frame).

S470: The destination device adjusts the reference clock of the second OTN frame based on the server layer clock and the second phase difference information.

Specifically, after obtaining the server layer clock, the destination device first calculates the reference clock of the second OTN frame of the intermediate device #1 based on the server layer clock, calculates a phase difference between the reference clock of the second OTN frame of the intermediate device #1 and the reference clock of the second OTN frame of the destination device, then sums up the obtained second phase difference information and the calculated phase difference (which may be referred to as third phase difference information), and adjusts the reference clock of the second OTN frame based on the third phase difference information, so that the reference clock of the second OTN frame adjusted by the destination device and the reference clock of the second OTN frame sent by the sending device are within a preset error range.

When calculating the phase difference between the destination device and the intermediate device #1, the destination device may obtain the phase difference by performing subtraction between a period quantity of the reference clock of the second OTN frame of the intermediate device #1 and a period quantity of the reference clock of the second OTN frame of the destination device within preset time.

It should be understood that when the reference clock of the second OTN frame adjusted by the destination device and the reference clock of the second OTN frame sent by the sending device are within the preset error range, it may be considered that the destination device adjusts the reference clock of the second OTN frame to be consistent with the reference clock of the second OTN frame sent by the sending device.

For example, when the destination device adjusts the reference clock of the second OTN frame of the destination device based on the phase difference information (including the second phase difference information and the third phase difference information), the destination device first generates a frequency deviation based on the phase difference information, and adjusts the reference clock of the second OTN frame based on the frequency deviation.

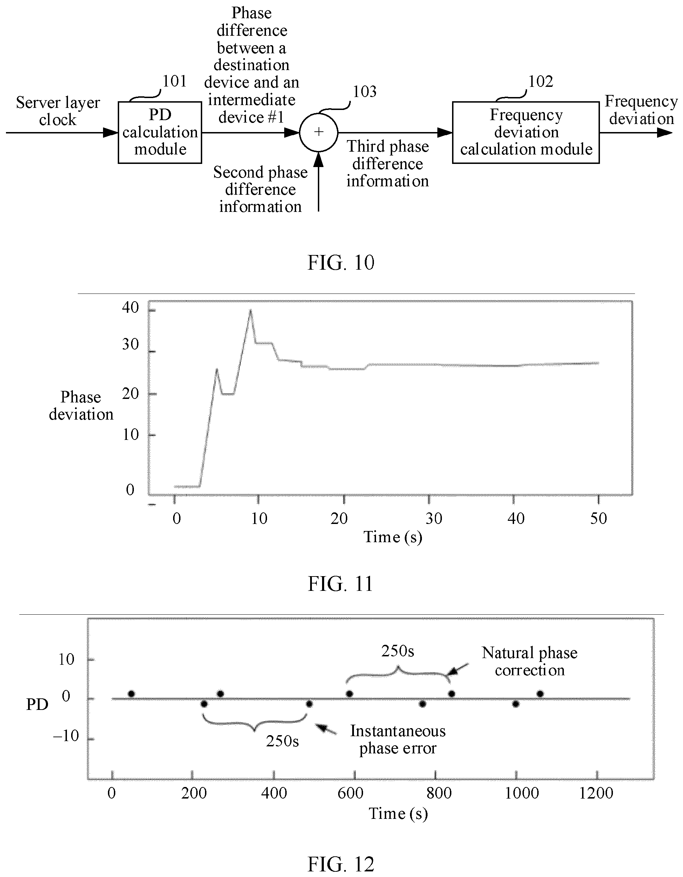

In a possible implementation, a schematic flowchart of generating the frequency deviation by the destination device is shown in FIG. 10. A PD calculation module 101, a frequency deviation calculation module 102, and a summation module 103 are modules in the destination device. Specifically, the PD calculation module is configured to input a server layer clock obtained by the destination device from a first OTN frame, and output a phase difference between the destination device and an intermediate device #1. The summation module 103 is configured to sum up the phase difference that is between the destination device and the intermediate device #1 and that is output by the PD calculation module 101 and second phase difference information obtained by the destination device from a second OTN frame, and output third phase difference information. The frequency deviation calculation module 102 is configured to calculate the frequency deviation based on the second phase difference information or the third phase difference information.

For example, it is assumed that a period (namely, a period in which the destination device generates the phase difference) in which the destination device calculates the phase difference between the destination device and the intermediate device #1 based on the obtained server layer clock is a first period. In addition, a period (for example, a period of an overhead area that is of the second OTN frame and that carries the second phase difference information) in which the destination device obtains the second phase difference information is a second period. When the second period is less than the first period, at some moments, the frequency deviation calculation module 102 of the destination device obtains only the second phase difference information when calculating the frequency deviation. In this case, it may be considered that the phase difference calculated by the destination device is 0. To be specific, the third phase difference information input by the frequency deviation calculation module 102 is a sum of the second phase difference information and 0. When the frequency deviation calculation module 102 obtains the phase difference between the destination device and the intermediate device #1 while obtaining the second phase difference information, the frequency deviation calculation module 102 also inputs both the second phase difference information and the phase difference between the destination device and the intermediate device #1. Alternatively, when the frequency deviation calculation module 102 of the destination device obtains only the second phase difference information when calculating the frequency deviation, it may be considered that the frequency deviation calculation module 102 calculates the frequency deviation based only on the second phase difference information.

It should be understood that when calculating the frequency deviation based on the second phase difference information or the third phase difference information, the calculation module 102 obtains the frequency deviation by multiplying the second phase difference information or the third phase difference information by a nominal clock.

Based on the foregoing solution, in the method for clock recovery provided in this embodiment of this application, a phase difference of each device instead of a frequency difference of an adjacent device is calculated to adjust a reference clock of the second OTN frame of the destination device, to recover a clock of the second OTN frame. In this solution of this application, lossless estimation of the reference clock of the second OTN frame can be implemented by accumulating phase differences, so that accuracy of adjusting the reference clock of the second OTN frame of the destination device can be improved, to improve accuracy of recovering the clock of the second OTN frame, and achieve an objective of improving system performance.

It should be noted that as transmission time of a service data stream is accumulated, as shown in FIG. 11, third phase difference information generated at a destination device approaches 0. To be specific, a sum of phase differences between upstream devices received by the destination device approaches 0 as the time is accumulated. However, it may be observed that partial PDs fluctuate unevenly. These fluctuations mean that a sum of accumulated phase differences has low-frequency noise of a system. In other words, when the foregoing phase information is used to recover a clock, a systematic phase jitter exists. To eliminate the systematic noise, in embodiments of this application, parameters of all devices are designed uniformly, so that the destination device can eliminate the systematic noise and phase jitter from the obtained sum of phase differences between the upstream devices.

In a possible implementation, a frequency F of a reference clock of a second OTN frame of each device in a system is set to be greater than or equal to a rate of the second OTN frame, for example, may range from 10 MHz to 1 GHz. For example, when the second OTN frame is an OSU frame, a minimum frequency F of the reference clock of the second OTN frame of each device may be set to 10 MHz.

In another possible implementation, a period T of phase difference information in the system is set to be greater than a period of the second OTN frame, for example, may range from 3 ms to 6 ms. In other words, a period T of phase difference information that is generated by each device and that is between the device and the upstream device of the device is greater than the period of the second OTN frame. For example, when the second OTN frame is an OSU frame, the period T of the phase difference information that is generated by each device and that is between the device and the upstream device of the device may be set to about 4 ms. For the period T of the phase difference information, refer to the foregoing related descriptions. Details are not described herein again.

In still another possible implementation, the frequency F of the reference clock of the second OTN frame and the period T of the phase difference information that are of each device in the system are set to satisfy the following relationship:

$$\left(F * T * 20\text{ppm}\right) < 10,$$

where

ppm is parts per million (parts per million).

FIG. 12 is a phase difference distribution diagram under a parameter constraint according to an embodiment of this application. As shown in FIG. 12, when a minimum frequency F of a reference clock of a second OTN frame of each device is 10 MHz, a period T of phase difference information is 4 ms, and a period of an overhead area that carries the phase difference information is 3 ms, the phase difference information jitters in a symmetric and sparse manner. In other words, a systemic phase jitter can be regularized by using the foregoing constraint parameter, so that systemic noise can be optimized through natural phase correction.

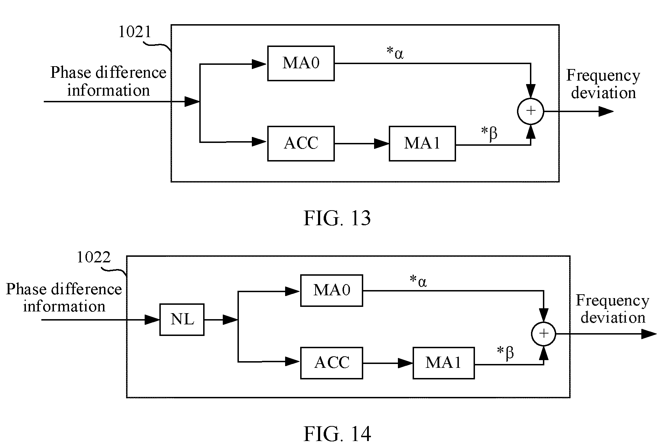

In a possible implementation, to eliminate the systematic phase jitter, refer to the modules of the destination device shown in FIG. 10. FIG. 13 is a diagram of a calculation procedure of a first frequency deviation calculation module 1021. As shown in FIG. 13, after receiving input phase difference information, a frequency deviation calculation module 1021 may divide phase difference information into two paths, and in one path, an instantaneous phase difference fluctuation caused by a quantization error and natural recovery is absorbed by using a moving average (moving average, MA) algorithm. In the other path, the phase difference information is accumulated (accumulate, ACC) first, for example, a final phase difference value is generated by using an accumulator, and then a fluctuation caused by the accumulated phase difference is eliminated by using the moving average algorithm. In this case, a frequency deviation output by the frequency deviation calculation module 1021 is a result obtained by adding two paths of output results by corresponding coefficients (including $\alpha$ and $\beta$).

It should be noted that a length of the moving average algorithm and coefficient values corresponding to the two paths may be designed to satisfy a target template specification, for example, a G.813 template specification.

In a possible implementation, FIG. 14 is a diagram of a calculation procedure of a second frequency deviation calculation module 1022. As shown in FIG. 14, the frequency deviation calculation module 1022 first performs a nonlinear (nonlinear, NL) processing process on input phase difference information. In this process, nonlinear noise carried in the phase difference information can be reduced, and then a result obtained by nonlinear noise reduction processing is divided into two paths. In one path, an instantaneous phase difference fluctuation caused by a quantization error and natural recovery is absorbed by using a moving average algorithm; and in the other path, phase difference information is first accumulated (for example, by using an accumulator) to generate a final phase difference value, and then a fluctuation caused by the accumulated phase difference is eliminated by using the moving average algorithm. In this case, a frequency deviation output by the frequency deviation calculation module 1022 is a result obtained by adding two paths of output results by corresponding coefficients.

Optionally, the NL processing process may be restricting a maximum absolute value N of each piece of phase difference information in the phase difference information. For example, when N is 10, if the phase difference is a negative number, the phase difference is limited to be less than 0 and greater than -10. If the phase difference is a positive number, the phase difference is limited to be greater than 0 and less than 10. For example, it is assumed that phase difference information received by a destination device is 20, -19, 5, 0, and 11, restricted phase difference information obtained by the nonlinear processing process is 10, -10, 5, 0, and 10.

For example, N may use a minimized clock recovery error as a target value, for example, enable an error of a recovered server layer clock of a second OTN frame to be less than or equal to 40 ns.

Based on the foregoing solution, a maximum value or a minimum value of each phase difference is limited by performing nonlinear processing on the phase difference information, so that system nonlinear noise carried in the phase difference information can be reduced, thereby improving precision of clock recovery.

It should be noted that regardless of whether an intermediate device or the destination device calculates a phase difference between the intermediate device or the destination device and an adjacent device, an error occurs in a process of calculating the phase difference. However, such an error does not occur for a long time. Therefore, to eliminate a jitter of the phase difference, in embodiments of this application, the destination device may eliminate such an error through slow compensation. For example, a reference clock of the second OTN frame may be adjusted within a time period $T_c$, where $T_c$ satisfies: $T_c \geq T / (20\text{ppm})$. For example, it is assumed that a period of the reference clock of the second OTN frame is 100 ns. When phase difference information received by the destination device is 1, the destination device may divide a period of one reference clock corresponding to the phase difference information of 1 into n equal-interval small periods. Intervals of the n small periods are calculated through $T_c / 100$. In other words, the destination device may compensate the received phase difference information once every $T_c / 100$ ns.

In addition, to reduce the jitter of the phase difference, in embodiments of this application, the intermediate device or the destination device may periodically increase or decrease the generated phase difference in a specific period $T_i$. The period $T_i$ satisfies $T_i = (F * T * T/D_i)$, where i is equal to 1 or 2. When i is equal to 1, $T_1$ corresponds to a period of the destination device, and $D_1$ is a phase difference that is generated by the destination device and that is between the destination device and an adjacent upstream device. When i is equal to 2, $T_2$ corresponds to a period of any intermediate device, and $D_2$ is a phase difference that is generated by the any intermediate device and that is between the any intermediate device and the adjacent upstream device. For example, the any intermediate device is used as an example to describe the process. It is assumed that a phase difference generated by the any intermediate device is 11. The intermediate device may first divide 11 into 10+1, and when generating the phase difference information, generate, by using 10, phase difference information sent to a downstream device of the intermediate device. Then, the intermediate device may send 1 to the downstream device of the intermediate device every period $T_2$. After sending 1 for n times, the intermediate device does not send 1 in subsequent time of n* $T_2$.

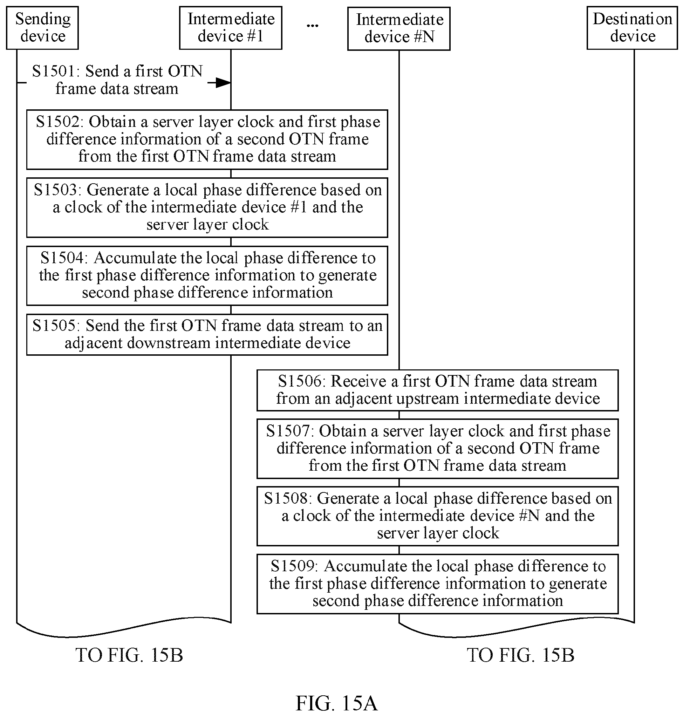

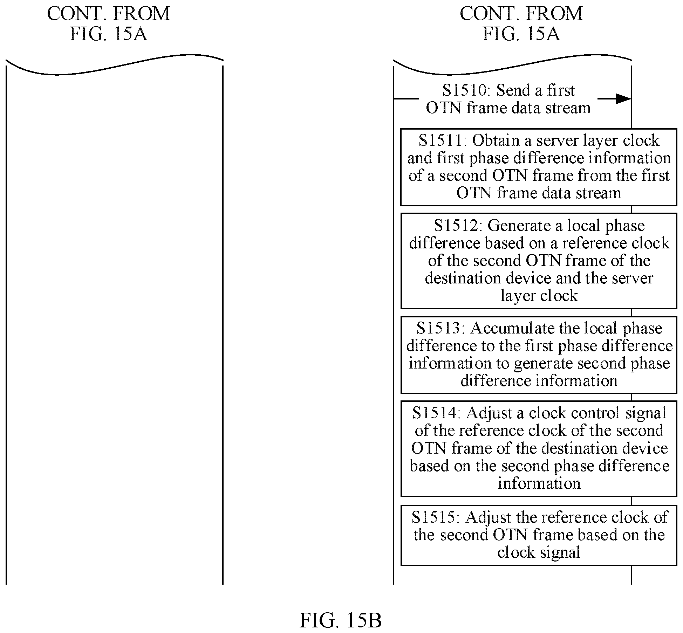

FIG. 15A and FIG. 15B are schematic flowcharts of a method 1500 for clock recovery according to an embodiment of this application. As shown in FIG. 15A and FIG. 15B, the method 1500 is a schematic flowchart shown from a perspective of device interaction. A sending device, an intermediate device (including any one of an intermediate device #1 to an intermediate device #N), and a destination device may all be an OTN device or may be performed by a component (such as a chip or a chip system) of the OTN device.

Specifically, the method 1500 shown in FIG. 15A and FIG. 15B includes the following plurality of steps.

S1501: A sending device sends a first OTN frame data stream.

Specifically, when the sending device needs to transmit service data to a destination device, the sending device sends the first OTN frame data stream to the destination device. The first OTN frame data stream means that a frame format of the data stream is a first OTN frame format.

S1502: An intermediate device #1 obtains a server layer clock and first phase difference information of a second OTN frame from the first OTN frame data stream.

Specifically, the intermediate device #1 receives the first OTN frame data stream sent by the sending device, and obtains the server layer clock and the first phase difference information of the second OTN frame from the first OTN frame data stream.

The server layer clock refers to a sending period or a sending frequency of the first OTN frame data stream. In other words, the sending device reads a service data stream based on the server layer clock, encapsulates the read service data stream into a payload area of a first OTN frame based on the server layer clock, and sends the first OTN frame data stream to the intermediate device #1, so that the intermediate device #1 can obtain the server layer clock from the first OTN frame data stream after receiving the first OTN frame data stream. In addition, after receiving the first OTN frame data stream, the intermediate device #1 obtains the second OTN frame through demapping, and obtains the first phase difference information from the obtained second OTN frame.

In some embodiments, the first phase difference information is carried in at least one overhead area of the second OTN frame. For example, when the second OTN frame includes a plurality of overhead areas, one piece of first phase difference information may be carried in each of the plurality of overhead areas included in the second OTN frame. The first phase difference information carried in the plurality of overhead areas may be first phase difference information that is sent by the sending device and that is at a same moment or phase difference information that is sent by the sending device and that is at different moments. If the first phase difference information carried in the plurality of overhead areas is the first phase difference information that is sent by the sending device and that is at the same moment, the sending device may include the first phase difference information generated at the same moment in different overhead areas sent at the different moments. In this case, the intermediate device #1 may determine, by using an algorithm such as a majority decision algorithm, the first phase difference information carried in the overhead areas of the plurality of second OTN frames that are consecutively received as the first phase difference information that is more accurate. In addition, a plurality of bytes may be non-consecutive bytes, to further improve bit error resilience performance of a system. If the first phase difference information carried in the plurality of overhead areas is the phase difference information that is sent by the sending device and that is at the different moments, because the plurality of overhead areas of the second OTN frame are sent by the sending device to the intermediate device #1 at the different moments, the sending device may include the first phase difference information generated at the different moments in the overhead areas sent at the different moments, so that the intermediate device #1 obtains, in the overhead areas of the second OTN frame that are received at the different moments, the first phase difference information sent by the sending device at the different moments.

In some other embodiments, the first phase difference information may occupy at least one byte in the overhead area of the second OTN frame. In other words, the first phase difference information is carried in a plurality of bytes in the overhead area of the second OTN frame.

For example, if the first phase difference information occupies one byte, that the first phase difference information may occupy at least one byte in the overhead area of the second OTN frame may mean that one byte may be used to carry one piece of first phase difference information or the plurality of bytes may be used to carry a plurality of pieces of same first phase difference information. When the plurality of bytes are used to carry the plurality of pieces of first phase difference information, transmission of the same first phase difference information may be repeatedly performed by using the plurality of bytes in the at least one overhead area of the second OTN frame, so that the intermediate device #1 may obtain the plurality of pieces of first phase difference information in one overhead area of the second OTN frame. In this manner of retransmission for a plurality of times, a case in which the first phase difference information obtained by the intermediate device #1 is inaccurate when a bit error occurs in a system can be avoided. For example, the intermediate device #1 determines, by using the algorithm such as the majority decision algorithm, the plurality of pieces of first phase difference information that is obtained from one overhead area of the second OTN frame as the first phase difference information that is more accurate.

If the first phase difference information occupies a plurality of bytes, that the first phase difference information may occupy at least one byte in the overhead area of the second OTN frame may mean that the plurality of bytes are used to carry one piece of first phase difference information or the plurality of bytes are used to carry the plurality of pieces of same first phase difference information. That the plurality of bytes are used to carry one piece of first phase difference information may be: It may be agreed upon that a plurality of bytes are used to carry the first phase difference information and are in one overhead area.

Specifically, the first phase difference information is a sum of phase differences between one or more groups of two adjacent upstream devices in one or more upstream devices of the intermediate device #1 through which the second OTN frame passes, and the phase differences between the one or more groups of two adjacent upstream devices are an integer quantity of periods of a nominal clock, where the period of the nominal clock is less than or equal to 10 ns.

It should be understood that because an upstream device of the intermediate device #1 is only the sending device, there is no sum of phase differences between one or more groups of two adjacent upstream devices in one or more upstream devices of the intermediate device #1. In this case, the first phase difference information may be considered as 0.

In some embodiments, when the first phase difference information is carried in the overhead area of the second OTN frame, the sending device may record 0 in the overhead area of the second OTN frame and send 0 to the intermediate device #1, or the sending device does not record any phase difference information in the overhead area of the second OTN frame.

S1503: The intermediate device #1 generates a local phase difference based on a clock of the intermediate device #1 and the server layer clock.

Specifically, the intermediate device counts a period quantity N1 of a nominal clock corresponding to the clock of the intermediate device #1 and a period quantity N2 of a nominal clock corresponding to the server layer clock, and obtains the local phase difference by performing subtraction between N1 and N2.

It should be noted that a physical crystal oscillator clock exists in the intermediate device #1. The crystal oscillator clock is the clock of the intermediate device #1, and is also referred to as a local clock of the intermediate device #1. After the intermediate device #1 obtains an upstream server layer clock, the intermediate device #1 calculates, by using the period of the nominal clock as a time interval, elapsed time for a period of the local clock to reach an expected period N, also calculates a period quantity of the server layer clock within the time period, and obtains a local phase difference by performing subtraction between the obtained two period quantities. The expected period N is a preset period quantity.

S1504: The intermediate device #1 accumulates the local phase difference to the first phase difference information to generate second phase difference information.

Specifically, the intermediate device #1 sums up the generated local phase difference and the obtained first phase difference information to obtain the second phase difference information.

S1505: The intermediate device #1 sends the first OTN frame data stream to an adjacent downstream intermediate device.

Specifically, when generating the second phase difference information, the intermediate device #1 includes the second phase difference information in the second OTN frame, maps the second OTN frame to a first OTN frame, and sends the first OTN frame data stream to the adjacent downstream device of the first intermediate device #1.

It should be noted that the intermediate device #1 processes information carried in the received first OTN frame data stream. Therefore, the first OTN frame data stream sent by the intermediate device #1 is not completely the same as the first OTN frame data stream sent by the sending device. In other words, data content carried in the two data streams is different, but corresponding frame formats of the first OTN frames are the same. Similarly, a second OTN frame carried by the first OTN frame data stream sent by the sending device is different from a second OTN frame carried by the first OTN frame data stream sent by the intermediate device #1. The former is the second OTN frame that carries the first phase difference information, and the latter is the second OTN frame that carries the second phase difference information. In other words, the two second OTN frames carry different content but have the same frame format, and both frame formats are second OTN frame formats.

It should be understood that when the first phase difference information is carried in the overhead area of the second OTN frame, the second phase difference information generated by the intermediate device #1 is also carried in the overhead area of the second OTN frame.

It should be understood that in S1502, that the intermediate device #1 obtains the server layer clock and the first phase difference information of the second OTN frame from the first OTN frame data stream is merely used to indicate that information that the intermediate device needs to obtain from the first OTN frame data stream includes the server layer clock and the first phase difference information of the second OTN frame, and does not represent that the server layer clock and the first phase difference information of the second OTN frame are simultaneously obtained. Similarly, in S1503, that the intermediate device #1 generates the local phase difference based on the local clock of the intermediate device #1 and the server layer clock may be before or after the intermediate device #1 obtains the first phase difference information of the second OTN frame. This is not limited in this application.

S1506: An intermediate device #N receives a first OTN frame data stream from an adjacent upstream intermediate device.

S1507: The intermediate device #N obtains the server layer clock and the first phase difference information of the second OTN frame from the first OTN frame data stream.

It should be understood that the server layer clock obtained by the intermediate device #N is a sending period or a sending frequency at which the adjacent upstream intermediate device of the intermediate device #N sends the first OTN frame data stream, and the first phase difference information of the second OTN frame obtained by the intermediate device #N is the first phase difference information carried in the second OTN frame carried in the first OTN frame data stream sent by the adjacent upstream intermediate device of the intermediate device #N. A sum of phase differences between a plurality of groups of two adjacent upstream devices in all upstream devices of the intermediate device #N includes a sum of a phase difference (also referred to as the local phase difference of the intermediate device #1) that is calculated by the intermediate device #1 and that is between the intermediate device #1 and the sending device, a phase difference (also referred to as a local phase difference of the intermediate device #2) that is calculated by the intermediate device #2 and that is between the intermediate device #2 and the intermediate device #1, and a phase difference (also referred to as a local phase difference of an intermediate device #3) that is calculated by the intermediate device #3 and that is between the intermediate device #3 and the intermediate device #2, ..., and a phase difference (also referred to as a local phase difference of an intermediate device #(N-1)) that is calculated by the intermediate device #(N-1) and that is between the intermediate device #(N-1) and an intermediate device #(N-2). It should be understood that the phase differences between the plurality of groups of two adjacent upstream devices are an integer quantity of periods of the nominal clock. The period of the nominal clock is less than or equal to 10 ns.

S1508: The intermediate device #N generates a local phase difference based on the clock of the intermediate device #N and the server layer clock.

S1509: The intermediate device #N accumulates the local phase difference to the first phase difference information to generate the second phase difference information.

S1510: The intermediate device #N sends the first OTN frame data stream to the destination device.

It should be noted that the overhead area of the second OTN frame carried in the first OTN frame data stream sent by the intermediate device #N to the destination device carries the second phase difference information generated by the intermediate device #N.

In some embodiments, the second phase difference information is carried in at least one overhead area of the second OTN frame. In other words, the second phase difference information is carried in the plurality of overhead areas of the second OTN frame. For example, when the second OTN frame includes the plurality of overhead areas, one piece of second phase difference information may be carried in each of the plurality of overhead areas included in the second OTN frame. The second phase difference information carried in the plurality of overhead areas may be second phase difference information that is sent by the intermediate device #N and that is at a same moment or second phase difference information that is sent by the intermediate device #N and that is at different moments. If the second phase difference information carried in the plurality of overhead areas is second phase difference information that is sent by the intermediate device #N and that is at a same moment, the intermediate device #N may include the second phase difference information generated at the same moment in different overhead areas sent at different moments. In this case, the destination device may determine, by using the algorithm such as the majority decision algorithm, the second phase difference information carried in the overhead areas of the plurality of consecutively received second OTN frames as the second phase difference information that is more accurate. If the second phase difference information carried in the plurality of overhead areas is phase difference information that is sent by the intermediate device #N and that is at different moments, the intermediate device #N may include the second phase difference information generated at the different moments in the overhead areas sent at the different moments, so that the destination device obtains, in the overhead areas of the second OTN frame that are received at the different moments, the second phase difference information sent by the intermediate device #N at the different moments.

In some other embodiments, the second phase difference information may occupy the at least one byte in the overhead area of the second OTN frame. For example, if the second phase difference information occupies one byte, that the second phase difference information may occupy the at least one byte in the overhead area of the second OTN frame may mean that one byte may be used to carry one piece of second phase difference information or the plurality of bytes may be used to carry a plurality of pieces of same second phase difference information. When the plurality of bytes are used to carry the plurality of pieces of second phase difference information, transmission of the same second phase difference information may be repeatedly performed by using the plurality of bytes in the at least one overhead area of the second OTN frame. In this way, the destination device may obtain a plurality of pieces of second phase difference information in one overhead area of the second OTN frame. In this manner of retransmission for the plurality of times, a case in which the second phase difference information obtained by the destination device is inaccurate when the bit error occurs in the system can be avoided. For example, the destination device determines, by using the algorithm such as the majority decision algorithm, the plurality of pieces of second phase difference information that is obtained from one overhead area of the second OTN frame as the second phase difference information that is more accurate. In addition, the plurality of bytes may be non-consecutive bytes, to further improve the bit error resilience performance of the system. If the second phase difference information occupies a plurality of bytes, that the second phase difference information may occupy the at least one byte in the overhead area of the second OTN frame may mean that when the second phase difference information cannot be completely carried by using one byte, a plurality of bytes in at least two adjacent overhead areas are used to carry the second phase difference information. To be specific, the destination device needs to consecutively receive a plurality of overhead areas, to obtain complete second phase difference information. This is because as the phase difference information is accumulated, an absolute value of the second phase difference information becomes greater. As a result, a byte originally used to carry the second phase difference information cannot completely carry correct second phase difference information because the absolute value of the second phase difference information exceeds a preset threshold. In this case, the intermediate device #N may split the second phase difference information into a plurality of pieces of partial phase difference information, and carry the complete second phase difference information by using a plurality of bytes in one overhead area. In other words, the second phase difference information may occupy the at least one byte in the overhead area of the second OTN frame. In other words, the second phase difference information is carried in the plurality of bytes in the overhead area of the second OTN frame. It should be understood that the plurality of overhead areas may also be used to carry a plurality of pieces of second phase difference information that is at a same moment and that occupies the plurality of bytes or second phase difference information that is at different moments and that occupies the plurality of bytes.

It should be understood that for other related descriptions of S1507 to S1510, refer to S1502 to S1505. Details are not described herein again.

S1511: The destination device obtains the server layer clock and the first phase difference information of the second OTN frame from the first OTN frame data stream.

Specifically, after receiving the first OTN frame data stream sent by the intermediate device #N, the destination device obtains the server layer clock and the first phase difference information of the second OTN frame from the first OTN frame data stream.

It should be understood that the server layer clock obtained by the destination device is a sending period or a sending frequency at which the intermediate device #N sends the first OTN frame data stream, and the first phase difference information of the second OTN frame obtained by the destination device is the first phase difference information carried in the second OTN frame carried in the first OTN frame data stream sent by the intermediate device #N. A sum of phase differences between a plurality of groups of two adjacent upstream devices in all upstream devices of the intermediate device #N includes a sum of a phase difference (also referred to as the local phase difference of the intermediate device #1) that is calculated by the intermediate device #1 and that is between the intermediate device #1 and the sending device, a phase difference (also referred to as a local phase difference of the intermediate device #2) that is calculated by the intermediate device #2 and that is between the intermediate device #2 and the intermediate device #1, and a phase difference (also referred to as a local phase difference of an intermediate device #3) that is calculated by the intermediate device #3 and that is between the intermediate device #3 and the intermediate device #2, ..., and a phase difference (also referred to as a local phase difference of an intermediate device #N) that is calculated by the intermediate device #N and that is between the intermediate device #N and an intermediate device #(N-1). It should be understood that the phase differences between the plurality of groups of two adjacent upstream devices are an integer quantity of periods of the nominal clock. The period of the nominal clock is less than or equal to 10 ns.

For other related descriptions of S1511, refer to S1502. Details are not described herein again.

S1512: The destination device generates a local phase difference based on a reference clock of the second OTN frame of the destination device and the server layer clock.

For related descriptions of the process, refer to S1503, or refer to S1508. Details are not described herein again. The reference clock of the second OTN frame of the destination device may be referred to as a reference clock of a local second OTN frame of the destination device, and may be obtained by using a local clock of the destination device.

It should be understood that the intermediate device generates a phase difference of the intermediate device through calculation by using a local clock of the intermediate device, and the local clock of the intermediate device distinguishes a second OTN frame service. In other words, when the intermediate device generates a local phase difference of the intermediate device, one phase difference corresponds to all second OTN frames in the first OTN frame. However, when performing clock recovery, the destination device needs to recover a clock of each second OTN frame. Therefore, when calculating the local phase difference, the destination device needs to use the reference clock of the second OTN frame of the destination device. The reference clock of the second OTN frame of the destination device is implemented by using a digital method, for example, a local crystal oscillator clock of the destination device is divided into different clocks based on different second OTN frames.

S1513: The destination device accumulates the local phase difference to the first phase difference information to generate second phase difference information.

For related descriptions of the process, refer to S1504 or S1509. Details are not described herein again.

S1514: The destination device adjusts a clock control signal of the reference clock of the second OTN frame of the destination device based on the second phase difference information.

Specifically, when adjusting the reference clock of the second OTN frame of the destination device, the destination device adjusts the reference clock of the second OTN frame of the destination device to be consistent with the reference clock of the second OTN frame of the sending device (which may be understood as being within a preset range). When the reference clock of the second OTN frame of the destination device is adjusted to be consistent with the reference clock of the second OTN frame of the sending device, the second phase difference information should be 0. Therefore, the destination device may determine a deviation of the reference clock of the second OTN frame of the destination device based on the second phase difference information, and generate a control signal that is in a direction opposite to the deviation. For example, when the second phase difference information is a positive number, for example, 1, it indicates that the reference clock of the second OTN frame of the destination device is faster than the reference clock of the second OTN frame of the sending device. In this case, the control signal is -1.

S1515: The destination device adjusts the reference clock of the second OTN frame based on the clock control signal.

Specifically, the destination device adjusts the reference clock of the second OTN frame by using the clock control signal, so that the reference clock of the second OTN frame adjusted by the destination device and the reference clock of the second OTN frame sent by the sending device are within a preset error range.

It should be understood that when the reference clock of the second OTN frame adjusted by the destination device and the reference clock of the second OTN frame sent by the sending device are within the preset error range, it may be considered that the destination device adjusts the reference clock of the second OTN frame to be consistent with the reference clock of the second OTN frame sent by the sending device.

It should be noted that in embodiments of this application described in the foregoing method 1500, the first phase difference information may be understood as phase difference information received by any device other than the sending device or phase difference information sent by the sending device. The second phase difference information is understood as phase difference information generated by any device other than the sending device. It should be understood that different devices receive different first phase difference information and generate different second phase difference information. In other words, the first phase difference information and the second phase difference information in embodiments of this application need to be understood with reference to a receiving device of the first phase difference information and a generation device of the second phase difference information.

It should be further noted that for a processing process of another intermediate device that is not shown in FIG. 15A and FIG. 15B, refer to a processing procedure of the intermediate device #1 or the intermediate device #N. Details are not described herein again.

It should be understood that in embodiments of this application, when any intermediate device or destination device calculates the local phase difference, a server layer clock obtained by the any intermediate device or destination device is a server layer clock sent by an adjacent upstream device. In other words, the server layer clock used to calculate the local phase difference is an upstream server layer clock. However, when the intermediate device generates the second phase difference information and sends the second phase difference information to a downstream device by using the first OTN frame data stream, the intermediate device sends the second phase difference information by encapsulating a service data stream into the first OTN frame by using the local server layer clock of the intermediate device that generates the second phase difference information. In other words, a server layer clock corresponding to a first OTN frame data stream input by any intermediate device is different from a server layer clock corresponding to a first OTN frame data stream sent by the any intermediate device.

It should be noted that in embodiments of this application, an overhead area used to carry phase difference information (including the first phase difference information and the second phase difference information) may reuse a reserved byte in an original overhead area in the second OTN frame, or a byte that is in an original payload area in the second OTN frame and that is allocated to carry the phase difference information payload area.

In some embodiments, the first OTN frame may be an ODU frame, for example, may be an ODUk frame or an ODUflex frame. The second OTN frame may be an OSU frame.

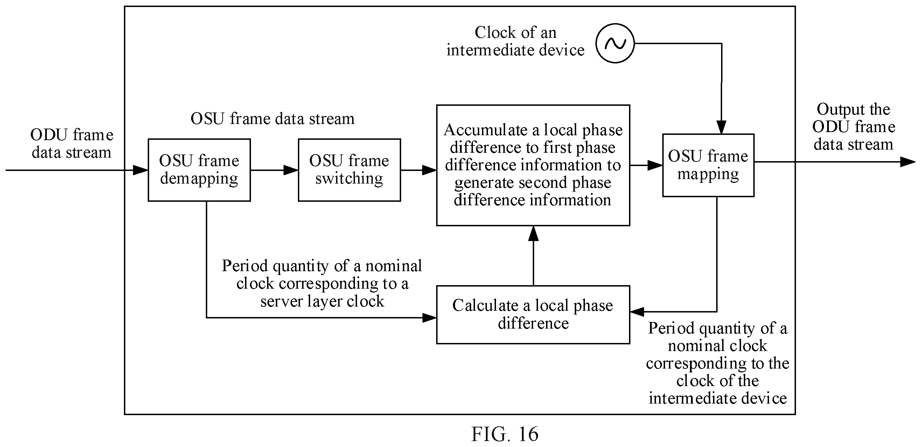

FIG. 16 is a diagram of a processing procedure of an intermediate device according to an embodiment of this application. Specifically, the intermediate device receives an ODU data stream from an upstream adjacent device, and demaps an OSU from the ODU data stream, to obtain a server layer clock and first phase difference information. The intermediate device separately calculates a period quantity of a nominal clock corresponding to the server layer clock and a period quantity of a nominal clock corresponding to a clock of the intermediate device, and performs subtraction between the calculated period quantity of the nominal clock corresponding to the server layer clock and the period quantity of the nominal clock corresponding to the clock of the intermediate device to obtain a local phase difference. In addition, the intermediate device sums up the first phase difference information and the local phase difference to obtain second phase difference information, and records the second phase difference information in a switched OSU frame. Subsequently, the intermediate device maps the OSU frame of the recorded second phase difference information to an ODU frame, generates an ODU frame data stream, and sends the ODU frame data stream to an adjacent downstream device.

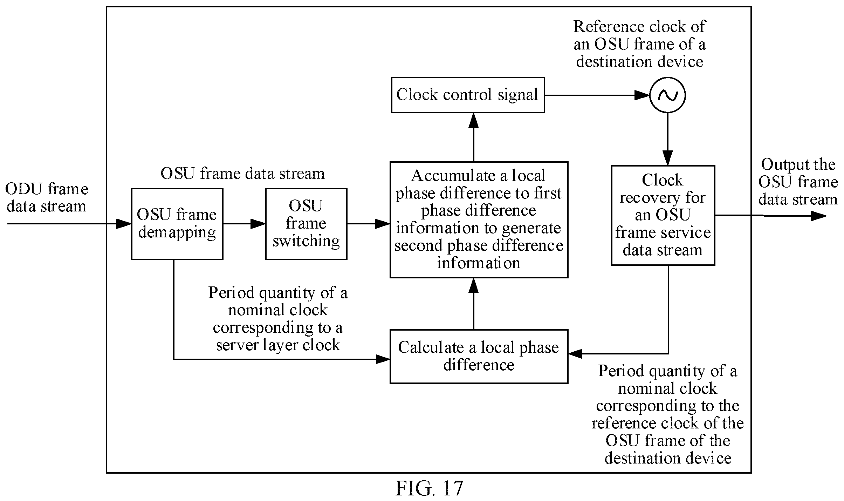

FIG. 17 is a diagram of a processing procedure of a destination device according to an embodiment of this application. Specifically, the destination device receives an ODU frame data stream from an upstream adjacent device, and demaps an OSU frame from the ODU frame data stream, to obtain a server layer clock and first phase difference information. The destination device separately calculates a period quantity of a nominal clock corresponding to the server layer clock and a period quantity of a nominal clock corresponding to a reference clock (obtained from a local clock of the destination device) of the OSU frame of the destination device, and obtains a local phase difference by performing subtraction between the calculated period quantity of the nominal clock corresponding to the server layer clock and the period quantity of the nominal clock corresponding to the reference clock of the OSU frame of the destination device. In addition, the destination device sums up the first phase difference information and the local phase difference to obtain second phase difference information. Subsequently, the destination device generates a control signal based on the second phase difference information, performs clock recovery on each OSU frame service data stream in the ODU frame data stream by using the control signal, and outputs an OSU frame data stream. The OSU frame data stream output by the destination device may be understood as data information of the OSU frame, and the data information includes service data and an overhead.

In the method for clock recovery provided in embodiments of this application, the intermediate device needs to record only phase difference information representing a local clock deviation of the intermediate device, and transfer the phase difference information to the destination device. In this way, the destination device adjusts a reference clock of the second OTN frame by using the obtained phase difference information, to achieve an objective of recovering a clock of the second OTN frame. In this solution, the intermediate device does not need to perform recovery on the clock of the second OTN frame. In addition, the clock deviation is quantized by using the phase difference information, so that an error (where the error is caused by a case in which only real numbers can be transferred when a frequency difference is transferred) that cannot be corrected when the frequency is used to quantize the clock deviation can be avoided. Therefore, according to the method for clock recovery provided in embodiments of this application, a clock recovery procedure can be simplified, and accuracy of adjusting the reference clock of the second OTN frame can be improved, thereby achieving an objective of improving system performance.

In some scenarios, when a sudden abnormality occurs in a reference clock of an OTN device in a system, a calculation error of the phase difference information is caused. To ensure accuracy of the phase difference information and avoid resource waste caused by transmitting incorrect phase difference information, embodiments of this application provide a method for clock recovery. When a device in the system finds, when calculating the phase difference information, that an obtained server layer clock is abnormal, or a local clock of the device is abnormal, the device does not generate new phase difference information, but sends fault information to a downstream device by using an overhead area of the second OTN frame, so that the destination device that finally receives the fault information does not perform clock recovery, to avoid a case such as a service sending failure caused by a clock recovery error. This achieves an objective of improving system performance. The method is performed by an intermediate device in the system or by a component of the intermediate device.

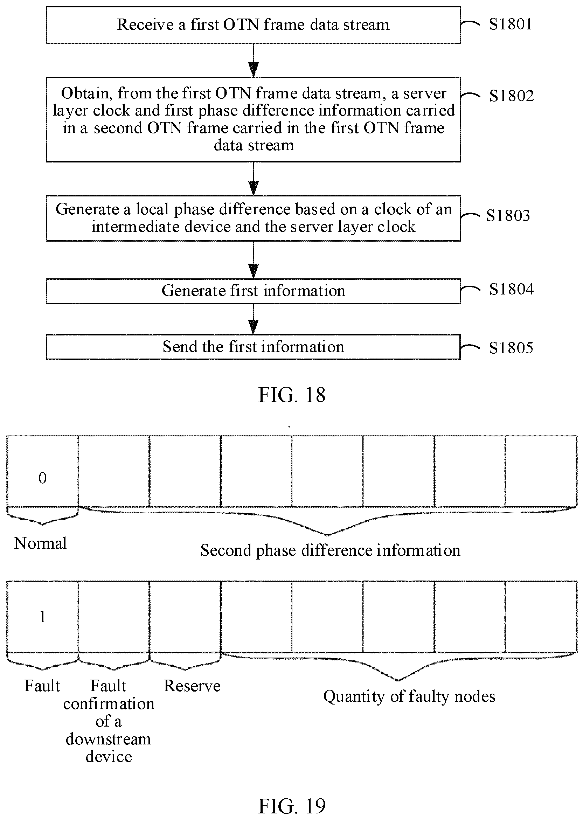

With reference to FIG. 18, the following describes in detail a method 1800 for clock recovery provided in embodiments of this application by using any intermediate device in FIG. 15A and FIG. 15B. The method 1800 for clock recovery is performed by any intermediate device in a system. In the following, descriptions are provided by using an intermediate device #1 as an example. As shown in FIG. 18, the method includes the following plurality of steps.

S1801: Receive a first OTN frame data stream.

S1802: Obtain a server layer clock and first phase difference information of a second OTN frame from the first OTN frame data stream.

S1803: Generate a local phase difference based on a clock of an intermediate device #1 and the server layer clock.

Specifically, the intermediate device #1 counts a period quantity N1 of a nominal clock corresponding to the clock of the intermediate device #1, and the intermediate device #1 also counts a period quantity N2 of a nominal clock corresponding to the server layer clock, and calculates a difference between N1 and N2 as a local phase difference.

For other related descriptions of S1801 to S1803, refer to S1501 to S1503 in the method 1500 shown in FIG. 15A and FIG. 15B. Details are not described herein again.

S1804: Generate first information.

The first information includes second phase difference information or fault information.

Specifically, when the period quantity N1 of the nominal clock corresponding to the clock of the intermediate device #1 counted by the intermediate device #1 and the period quantity N2 of the nominal clock corresponding to the server layer clock counted by the intermediate device #1 belong to a preset interval, and when the difference between N1 and N2 is equal to -1, 0, or 1 within preset time, the intermediate device #1 accumulates the local phase difference to the first phase difference information to generate the second phase difference information. When the intermediate device #1 determines that the period quantity N1 of the nominal clock corresponding to the clock of the intermediate device #1 does not belong to the preset interval, and the period quantity N2 of the nominal clock corresponding to the server layer clock counted by the intermediate device #1 does not belong to the preset interval, and the difference between N1 and N2 is not equal to at least one of -1, 0, or 1 within the preset time, the intermediate device #1 generates the fault information. The preset interval is:

$$\left[ N \times \left(1 - 20\, ppm\right),\ N \times \left(1 + 20\, ppm\right) \right].$$

The preset time is $T_{\text{Nominal}} \times 1/(40\ ppm)$, or $T_{\text{Nominal}} \times 25000$, and $T_{\text{Nominal}}$ is the period of the nominal clock.

It should be noted that in an OTN network, an actual frequency deviation of a device is usually $\pm 20$ ppm, the preset interval is used to detect an abnormal frequency deviation other than $\pm 20$ ppm of the system, and the preset time is used to detect a sudden frequency deviation of the device.

S1805: Send the first information.

It should be noted that when the intermediate device #1 detects that no fault occurs, the first information is the second phase difference information, and when the intermediate device #1 detects that a fault occurs, the first information is the fault information. It should be understood that the first information is carried in at least one overhead of the second OTN frame. The first information occupies at least one byte, and at least one bit in the at least one byte indicates that information included in the first information is the second phase difference information or the fault information. For example, FIG. 19 is a diagram of a structure of first information when first information occupies one byte. When a highest bit of the one byte is 0, it indicates that information included in the first information is second phase difference information, and the second information is carried on other seven bits. When a highest bit is 1, it indicates that information included in the first information is fault information.

Optionally, when the first information is the fault information, the fault information includes a quantity of faulty devices, namely, a quantity of nodes that are between a faulty intermediate device #1 and a destination device. The quantity of faulty devices may be indicated by using a plurality of bits in the remaining seven bits. As shown in FIG. 19, the quantity of faulty devices may be indicated by using five lower bits. For example, when determining that a clock of an intermediate device #1 is abnormal, the intermediate device #1 generates the fault information, records 1 in an indication field (for example, five bits in FIG. 19) indicating the quantity of faulty devices, and sends the fault information recording the quantity of faulty devices to a downstream device. After receiving the fault information, the downstream device may successively perform counting in the indication field indicating the quantity of faulty devices, so that after receiving the fault information, the destination device can determine, based on the quantity counted in the indication field, a location of the faulty intermediate device #1.

Optionally, when the first information may further include confirmation information, the confirmation information indicates the downstream device to confirm that the first information is the fault information. As shown in FIG. 19, a second higher bit may be used for indication. For example, when a downstream intermediate device of the intermediate device #1, for example, an intermediate device #2, receives the first information that is sent by the intermediate device #1 is the fault information, the intermediate device #2 may confirm again that a fault occurs in a current OTN system by calculating whether a system frequency deviation or a sudden frequency deviation of the device exists, and fill 1 in the second bit. Through two confirmations, false alarms caused by some recoverable abnormal jitters can be avoided in the OTN system, to ensure stable system performance.

Similarly, when the first information is second phase difference information, the plurality of pieces of first information may be carried in a plurality of bytes in an overhead area of a second OTN frame. When the plurality of bytes are consecutive or non-consecutive bytes, bit error resilience performance of the system can be improved.

It should be understood that FIG. 19 is merely an example instead of a limitation. In embodiments of this application, bits occupied by the fault indication, the confirmation information, and the quantity of faulty devices, namely, a quantity of bits, are not limited to those shown in FIG. 19. Other simple changes based on FIG. 19, for example, indicating, by using a last bit, that the first information includes the second phase difference information or the fault information, fall within the protection scope of this application.

In addition, the foregoing method 1800 is described by using only the intermediate device #1 as an example. It should be understood that for another intermediate device, the second phase difference information is an accumulation of a local phase difference and an obtained first phase difference. The quantity of faulty devices included in the fault information is a quantity of devices between the intermediate device and the destination device.

Based on the foregoing solution, when phase difference information calculated by the intermediate device does not satisfy a preset condition, the intermediate device sends the fault information. This avoids a case in which the downstream device calculates incorrect phase difference information, saves resources of the system, and improves system performance.

It should be noted that in the method for clock recovery provided in the foregoing embodiments of this application, calculation is performed by using a local clock of the device as a reference. In other words, elapsed time for a nominal clock corresponding to a local clock to reach a preset expected period quantity is first calculated, a period quantity of the nominal clock corresponding to an upstream server layer clock is calculated in the same time, and then subtraction is performed between the expected period quantity and the period quantity of the nominal clock corresponding to the upstream server layer clock to obtain a local phase difference. However, in some scenarios, for example, when frequency deviations of some intermediate devices are large in a network system, there is a slow low-frequency phase deviation in phase difference information obtained by the destination device. The low-frequency phase deviation cannot be eliminated by a clock recovery loop, and finally clock recovery performance is reduced. As a result, a requirement of a current standard template (G.813) cannot be met. To resolve the foregoing problem, embodiments of this application provide a method 2000 for clock recovery. In the method, a trigger moment for calculating the local phase difference is set. Therefore, a faster reference clock or a slower reference clock is always selected for all intermediate devices, to reduce an error caused when the local clock is used as a reference clock, to achieve a more accurate clock recovery effect.

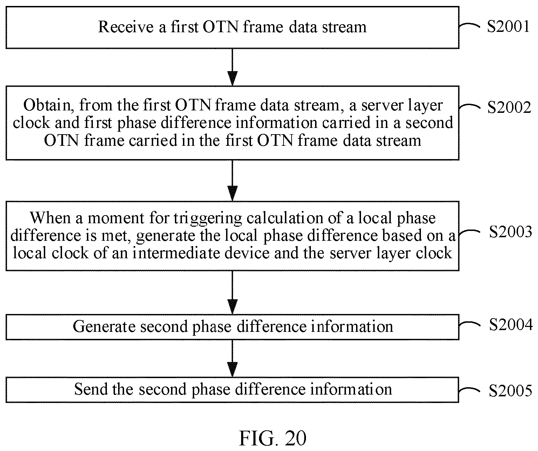

With reference to FIG. 20, the following describes in detail a method 2000 for clock recovery provided in embodiments of this application by using the intermediate device #1 in FIG. 15A and FIG. 15B as an example. As shown in FIG. 20, the method includes the following plurality of steps.

S2001: Receive a first OTN frame data stream.

S2002: Obtain a server layer clock and first phase difference information of a second OTN frame from the first OTN frame data stream.

For S2001 and S2002, refer to S1501 and S1502 in the method 1500 shown in FIG. 15A. Details are not described herein again.

S2003: When a moment for triggering calculation of a local phase difference is met, generate the local phase difference based on a local clock of an intermediate device and the server layer clock.

Specifically, when the moment for triggering calculation of the local phase difference is met, an intermediate device #1 counts a period quantity N1 of a nominal clock corresponding to a local clock of the intermediate device #1, and the intermediate device #1 also counts a period quantity N2 of a nominal clock corresponding to the server layer clock, and calculates a difference between N1 and N2 as a local phase difference.

When a faster clock between the local clock and the server layer clock is selected as a reference clock, the moment for triggering calculation of the local phase difference is a moment at which when the period quantity of the nominal clock corresponding to the local clock is earlier equal to an expected period, or the period quantity of the nominal clock corresponding to the server layer clock is earlier equal to an expected period, either of the period quantity of the nominal clock corresponding to the local clock and the period quantity of the nominal clock corresponding to the server layer clock is earlier equal to the expected period. For example, if a preset expected period is N, elapsed time in which N1 is equal to N is a first time interval, and elapsed time in which N2 is equal to N is a second time interval, when the local clock is faster than the server layer clock, the first time interval is less than the second time interval. In other words, the period quantity of the nominal clock corresponding to the local clock is first stepped to the expected period. In this case, the intermediate device #1 triggers a procedure of calculating the local phase difference. Alternatively, when the server layer clock is faster than the local clock, to be specific, when the second time interval is less than the first time interval, a period quantity of the nominal clock corresponding to the server layer clock is first stepped to the expected period. In this case, the intermediate device #1 triggers a procedure of calculating the local phase difference. The expected period may be set by $N = F \times T$, where F is a frequency of the nominal clock and T is a period in which the local phase difference is generated.

Similarly, when a slower clock between the local clock and the server layer clock is selected as a reference clock, the moment for triggering calculation of the local phase difference is a moment at which either of the period quantity of the nominal clock corresponding to the local clock and the period quantity of the nominal clock corresponding to the server layer clock is later equal to the expected period. For example, when the local clock is slower than the server layer clock, to be specific, when the first time interval is greater than the second time interval, the period quantity of the nominal clock corresponding to the local clock is stepped to the expected period later than the period quantity of the nominal clock corresponding to the server layer clock. Therefore, when the period quantity of the nominal clock corresponding to the local clock is equal to the expected period, the intermediate device #1 triggers a procedure of calculating the local phase difference. Alternatively, when the server layer clock is slower than the local clock, to be specific, when the second time interval is greater than the first time interval, the period quantity of the nominal clock corresponding to the server layer clock is stepped to the expected period later than the period quantity of the nominal clock corresponding to the local clock. Therefore, when the period quantity of the nominal clock corresponding to the server layer clock is equal to the expected period, the intermediate device #1 triggers a procedure of calculating the local phase difference.

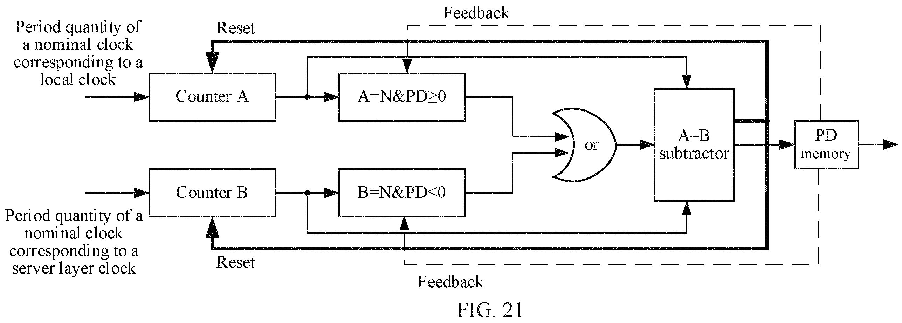

In a possible implementation, FIG. 21 is a first schematic flowchart of calculating a phase difference. As shown in FIG. 21, a counter A and a counter B respectively count a period quantity of a nominal clock corresponding to a local clock and a period quantity of a nominal clock corresponding to a server layer clock of a sending device, where N is an expected period quantity.

For example, in a scenario, it is assumed that a faster clock is used as a reference clock. When the period quantity of the nominal clock corresponding to the local clock of the intermediate device #1 first reaches the expected period N, to be specific, when $A = N \& PD \geq 0$ is first satisfied, an OR gate is triggered. A phase difference calculated by an A-B subtractor in this case is a period quantity B counted by the N-counter B. In this case, a reference clock of the intermediate device #1 is set as the local clock. Alternatively, when the period quantity of the nominal clock corresponding to the server layer clock first reaches the expected period N, to be specific, when $B = N \& PD < 0$ is first satisfied, an OR gate is triggered. A phase difference calculated by an A-B subtractor in this case is a period quantity A-N counted by the counter A. In this case, the server layer clock is set as the reference clock of intermediate device #1.

For example, in another scenario, it is assumed that a slower clock is used as a reference clock. When the period quantity of the nominal clock corresponding to the local clock of the intermediate device #1 first reaches the expected period N, to be specific, when $A = N \& PD \geq 0$ is first satisfied, an OR gate is not triggered. Instead, when the period quantity of the nominal clock corresponding to the server layer clock reaches the expected period N, the OR gate is triggered. A phase difference calculated by an A-B subtractor in this case is a period quantity A-N counted by the counter A. In this case, the reference clock of the intermediate device #1 is set as the server layer clock. Alternatively, when the period quantity of the nominal clock corresponding to the local clock of the intermediate device #1 reaches the expected period N later than the period quantity of the nominal clock corresponding to the server layer clock, to be specific, when $A = N \& PD \geq 0$ is established, an OR gate is triggered. A phase difference calculated by an A-B subtractor in this case is a period quantity B counted by the N-counter B. In this case, the local clock of the intermediate device #1 is set as the reference clock of the intermediate device #1.

After calculating the phase difference, the A-B subtractor stores a phase difference calculation result in a PD register (which may also be referred to as a phase detection register), and resets the counter A and the counter B (for example, sending indication information to the counter A and the counter B, and indicating the counter A and the counter B to return to zero). In addition, the PD register feeds back the calculated phase difference to two condition modules (including $A = N \& PD \geq 0$ and $B = N \& PD < 0$).

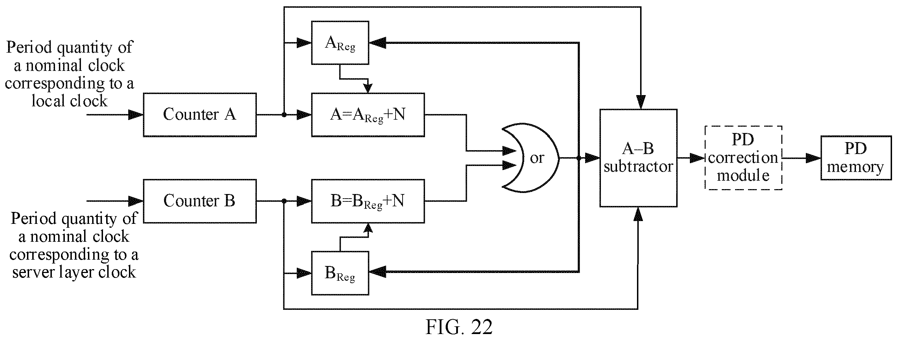

In a possible implementation, FIG. 22 is a second schematic flowchart of calculating a phase difference. As shown in FIG. 22, a counter A and a counter B respectively count a period quantity of a nominal clock corresponding to a local clock and a period quantity of a nominal clock corresponding to a server layer clock, where N is an expected period quantity.

For example, in a scenario, it is assumed that a faster clock is used as a reference clock. When the period quantity of the nominal clock corresponding to the local clock of the intermediate device #1 first reaches the expected period N, to be specific, when $A = A_{Reg} + N$ is first satisfied, an OR gate is triggered. A phase difference calculated by an A-B subtractor in this case is a period quantity counted by the N-counter B. In addition, the counter A and the counter B register values at a moment A and a moment B, which are respectively $A_{Reg}$ and $B_{Reg}$. In this case, a reference clock of the intermediate device #1 is set as the local clock. Alternatively, when the period quantity of the nominal clock corresponding to the server layer clock first reaches the expected period N, to be specific, when $B = B_{Reg} + N$ is first satisfied, an OR gate is triggered. A phase difference calculated by an A-B subtractor in this case is a period quantity A-N counted by the counter A. In addition, the counter A and the counter B register values at a moment A and a moment B, which are respectively $A_{Reg}$ and $B_{Reg}$. In this case, the server layer clock is set as the reference clock of intermediate device #1.

For example, in another scenario, it is assumed that a slower clock is used as a reference clock. When the period quantity of the nominal clock corresponding to the local clock of the intermediate device #1 first reaches the expected period N, to be specific, when $A = A_{Reg} + N$ is first satisfied, an OR gate is not triggered. Instead, when the period quantity of the nominal clock corresponding to the server layer clock reaches the expected period N, the OR gate is triggered. A phase difference calculated by an A-B subtractor in this case is a period quantity A-N counted by the counter A. In this case, the reference clock of the intermediate device #1 is set as the server layer clock. Alternatively, when the period quantity of the nominal clock corresponding to the local clock of the intermediate device #1 reaches the expected period N later than the period quantity of the nominal clock corresponding to the server layer clock, to be specific, when $A = A_{Reg} + N$ is established, an OR gate is triggered. A phase difference calculated by an A-B subtractor in this case is a period quantity B counted by the N-counter B. In addition, the counter A and the counter B register values at a moment A and a moment B, which are respectively $A_{Reg}$ and $B_{Reg}$. In this case, the local clock of the intermediate device #1 is set as the reference clock of the intermediate device #1.

After calculating the phase difference, the A-B subtractor stores a phase difference calculation result into a PD register (which may also be referred to as a phase detection register).

It should be understood that for each calculation process, $A_{Reg}$ and $B_{Reg}$ are values of A and B that are counted by the counter A and the counter B when the phase difference is calculated previously.

It should be noted that in embodiments of this application, the reference clock may be understood as a clock used to determine a detection period (also referred to as a detection window). For example, when the faster clock is used as the reference clock, the process may be understood as: selecting, from a local clock or an upstream server layer clock of an intermediate device, elapsed time for a nominal clock corresponding to a faster clock to reach the expected period quantity N as the detection period, to calculate a period quantity of a nominal clock corresponding to the other slower clock in the detection period.

It should be further noted that in the calculation procedure shown in FIG. 22, a counter does not need to be reset (reset). Therefore, an effect of simplifying a calculation process is implemented. However, the counter A and the counter B each have a limited bit width. In other words, the counter A and the counter B each have a limit capacity in which storing can be performed. When the counter A and the counter B reach a maximum countable value, the counter A and the counter B perform recounting. In this case, a sudden change error is caused to a difference between the calculated period quantity A and period quantity B. To resolve the problem, there are two implementations. In a possible implementation, a PD correction module may be introduced before a PD memory. When an absolute value of the phase difference calculated by the A-B subtractor is greater than a threshold, the phase difference is corrected to a difference between the threshold and the absolute value of the phase difference. The threshold is a preset range of a period of a counter, for example, may be a half of the period of the counter (namely, a maximum value that can be stored in the counter). For example, if storage limits of the counter A and the counter B are 10000, when calculation of a local phase difference is triggered, because a period A counted by the counter A is greater than 10000, a recount of the counter A is 2, and a period B counted by the counter B is 9998. In this case, an absolute value of the phase difference calculated by the A-B subtractor is 9996. The absolute value exceeds 5000, and therefore, the phase difference is corrected to 10000-9996=4. In another implementation, a problem of counter overflow may be resolved by using a property of bit arithmetic. The counter A and the counter B need to be represented by a signed bit sequence. It is assumed that a bit width of a bit sequence of a counter is one byte. When A counts to 127 (01111111), it is assumed that B counts to 120 (01111000). A continues to count and overflows to -128 (10000000), and B is (01111001). In this case, a result of A-B is 7 (10000000-01111001=00000111), which is still a correct value. Actually, the manner is always valid provided that a target count period is less than half a value range of the counter.

Based on this solution, the phase difference can be corrected after the counter reaches a period of the counter, to ensure accuracy of phase difference calculation, and further improve accuracy of clock recovery.

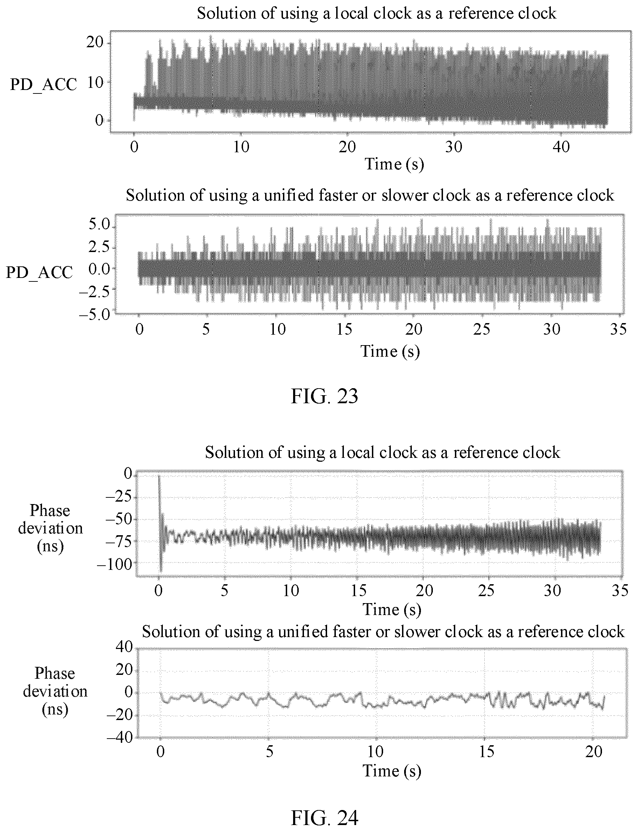

FIG. 23 shows a simulation comparison result of using a local clock as a reference clock by all intermediate devices and using a unified faster or slower clock as a reference clock according to an embodiment of this application. Simulation parameters are set as follows: A destination device is an open-loop setting of a sink end, a period of an overhead area that carries phase difference information is 3.435 ms, a frequency of a nominal clock is 78.125 MHz, and frequency deviations of 11 devices are respectively [0, 9.05, -0.005, 18.23, -8.59, -9.58, -3.46, 12.99, -6.36, -19.01, and 0] ppm. A vertical coordinate PD_ACC represents the phase difference information received by the destination device from the overhead area. As shown in FIG. 23, when the intermediate devices all use the local clock as the reference clock, there is a slow deviation in the phase difference information recorded by the destination device. Such a low-frequency deviation cannot be eliminated by a clock recovery loop. Finally, clock recovery performance is reduced, and a requirement of a template cannot be met. However, the solution provided in embodiments of this application can effectively eliminate the low-frequency phase deviation, and therefore a phase error of clock recovery can be greatly reduced, thereby improving clock recovery performance.

FIG. 24 shows a simulation comparison result of using a local clock as a reference clock by all intermediate devices and using a unified faster or slower clock as a reference clock according to an embodiment of this application. Simulation parameters are set as follows: A loop bandwidth of a destination device is about 1 Hz, a period of an overhead area that carries phase difference information is 3.435 ms, a frequency of a nominal clock is 78.125 MHz, and frequency deviations of 11 devices are respectively [0, 9.05, -0.005, 18.23, -8.59, -9.58, -3.46, 12.99, -6.36, -19.01, and 0] ppm. A vertical coordinate is a difference between a clock recovered by the destination device and a clock sent by a sending device, and can indicate clock recovery performance. As shown in FIG. 24, when the intermediate devices all use the local clock as the reference clock, the clock recovered by the destination device has a jitter of about 50 ns and partially has high-frequency oscillations, which cannot satisfy a requirement of a clock template. However, the solution provided in embodiments of this application greatly reduces a phase error of clock recovery, improves the clock recovery performance, and satisfies a requirement of a G.813 clock performance template under a condition of a high loop bandwidth of a sink end.

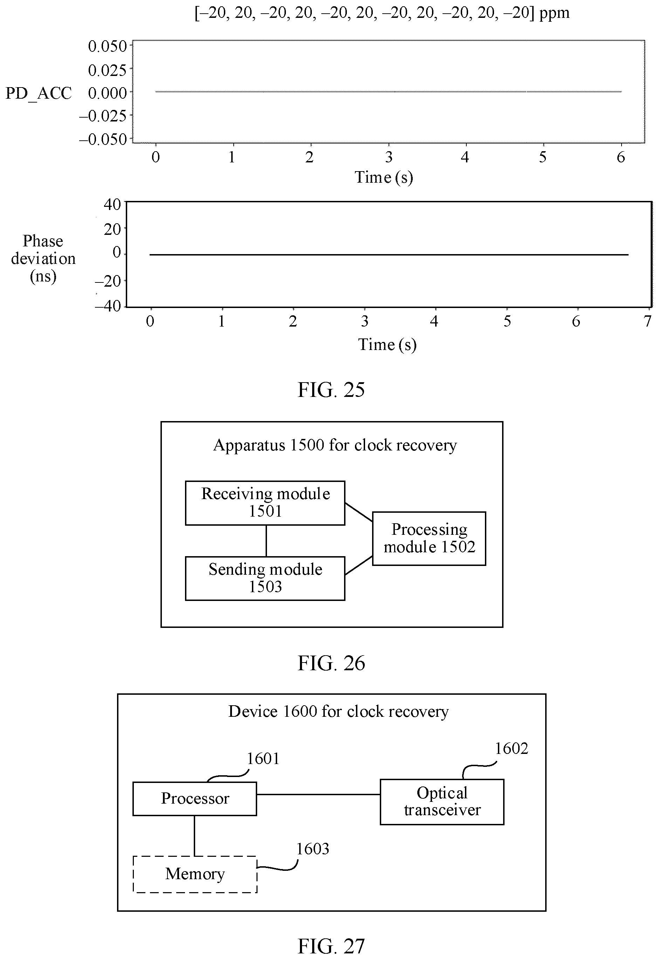

FIG. 25 shows a simulation result of using a unified faster or slower clock as a reference clock when intermediate devices are all in an extreme frequency deviation ($\pm$20 ppm). Simulation parameters are set as follows: A loop bandwidth of a destination device is about 1 Hz, a period of an overhead area that carries phase difference information is 3.435 ms, a frequency of a nominal clock is 78.125 MHz, and frequency deviations of 11 devices are respectively [-20, 20, -20, 20, -20, 20, -20, 20, -20, 20, -20] ppm, as shown in FIG. 22. Because all intermediate devices always select a reference clock in one direction to remove a difference of a basic clock, a phase deviation after clock recovery is reduced to 0.

To reduce a frequency deviation jitter of the intermediate device and implement a more accurate clock recovery effect, in another implementation, an average clock may be always selected for all intermediate devices, to reduce an error caused when a local clock is used as the reference clock. In some embodiments, the average clock is in any time interval between a first time interval and a second time interval. Similarly, the first time interval is elapsed time in which N1 is counted as equal to N, the second time interval is elapsed time in which N2 is counted as equal to N, and N is a preset expected period (also referred to as an expected period quantity). For example, when the first time interval is 3 ms and the second time interval is 3.00006 ms, an integer quantity of periods of a clock corresponding to 3.00003 ms may be selected as a period of the average clock. In some other embodiments, the period of the average clock is rounding an average value of the first time interval and the second time interval. For example, a manner of rounding the average value may be rounding down, rounding up, or rounding off. For example, when the average value of the first time interval and the second time interval is 3.00003 ms, the period of the average clock may be determined as 3 ms by rounding down. Alternatively, when the average value of the first time interval and the second time interval is 3.50000 ms, the period of the average clock may be determined as 4 ms by rounding off. When both a local clock and a server layer clock of the intermediate device pass through the period of the average clock, an integer quantity of period quantities of a difference between a nominal clock corresponding to the local clock and a nominal clock corresponding to the server layer clock is calculated as a local phase difference.

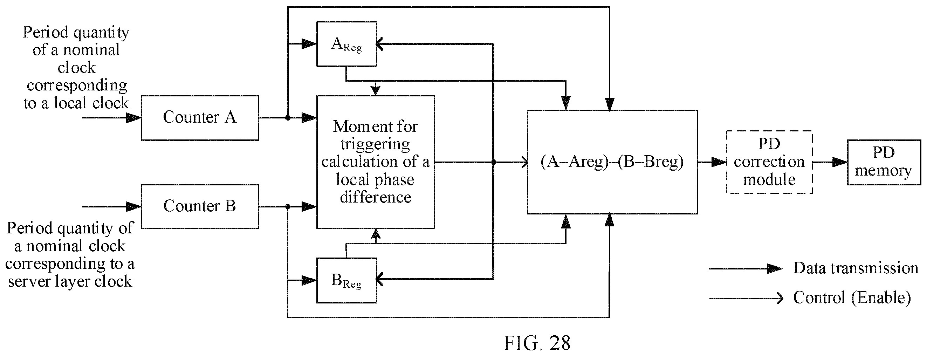

FIG. 28 is a third schematic flowchart of calculating a phase difference according to an embodiment of this application. Specifically, in FIG. 28, a counter A and a counter B respectively always count a period quantity of a nominal clock corresponding to a local clock and a period quantity of a nominal clock corresponding to a server layer clock of a sending device. A storage unit $A_{Reg}$ and a storage unit $B_{Reg}$ are respectively configured to store a period quantity counted by the counter A and a period quantity counted by the counter B each time a local phase difference is calculated, to obtain a difference between the period quantity stepped by the counter A and the period quantity stepped by the counter B since previous triggering when the local phase difference is calculated next time. Specifically, when a given moment for triggering calculation of the local phase difference is met, a subtractor calculates the difference between the period quantity stepped by the counter A and the period quantity stepped by the counter B since the previous triggering, namely, a difference between (A-$A_{Reg}$) and (B-$B_{Reg}$). In addition, the subtractor enables the storage unit $A_{Reg}$ and the storage unit $B_{Reg}$ to respectively store period values of the counter A and the counter B at the moment. In other words, the storage unit $A_{Reg}$ updates the stored period value to a value of the counter A at a trigger moment, and the storage unit $B_{Reg}$ updates the stored period value to a value of the counter B at a trigger moment. After the subtractor calculates a phase difference, the generated phase difference is corrected by a PD correction module and stored in a PD memory.

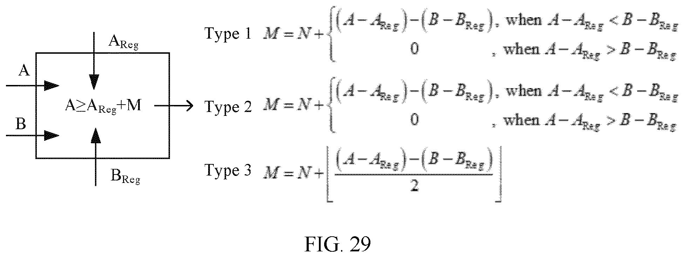

FIG. 29 shows three possible types of moments for triggering calculation of a local phase difference in FIG. 28. Specifically, in FIG. 29, a moment for triggering calculation of the local phase difference may be represented as A$\geq A_{Reg}$+M. M may be selected according to a corresponding rule. Specifically, when a faster clock is selected as a reference clock, M is represented as a type 1 in FIG. 29; when a slower clock is selected as a reference clock, M is represented as a type 2 in FIG. 29; and when an average clock is selected as a reference clock, M is represented as a type 3 in FIG. 29. The type 1, the type 2, and the type 3 are respectively represented by the following formulas (1) to (3):

$$M = N + \begin{cases} \left(A - A_{\mathrm{Reg}}\right) - \left(B - B_{\mathrm{Reg}}\right), & \text{when } A - A_{\mathrm{Reg}} < B - B_{\mathrm{Reg}} \\ 0 & , \text{when } A - A_{\mathrm{Reg}} > B - B_{\mathrm{Reg}} \end{cases} \quad (1)$$

$$M = N + \begin{cases} \left(A - A_{\mathrm{Reg}}\right) - \left(B - B_{\mathrm{Reg}}\right), & \text{when } A - A_{\mathrm{Reg}} > B - B_{\mathrm{Reg}} \\ 0 & , \text{when } A - A_{\mathrm{Reg}} < B - B_{\mathrm{Reg}} \end{cases} \quad (2)$$

$$M = N + \left\lfloor \frac{\left(A - A_{\mathrm{Reg}}\right) - \left(B - B_{\mathrm{Reg}}\right)}{2} \right\rfloor \quad (3)$$

It should be noted that at the moment for triggering calculation of the local phase difference shown in FIG. 29, only monitoring a counter A is used to determine whether the moment for triggering calculation of the local phase difference is met. It may be understood that the moment for triggering calculation of the local phase difference may be further replaced with B$\geq B_{\mathrm{Reg}}$ +M. In addition, the average clock in FIG. 29 shows only one form of rounding down. For example, manners such as rounding up or rounding off may be further used. This is not limited in this application.

With reference to FIG. 28 and FIG. 29, it may be learned that when the moment for triggering calculation of the local phase difference shown in FIG. 29 is used, whether a corresponding moment for triggering calculation of the local phase difference is met may be monitored only for the period quantity currently counted by the counter A or the period quantity counted by the counter B. Compared with simultaneously monitoring the period values of the two counters in FIG. 21 or FIG. 22, the procedure is simpler and more reliable.

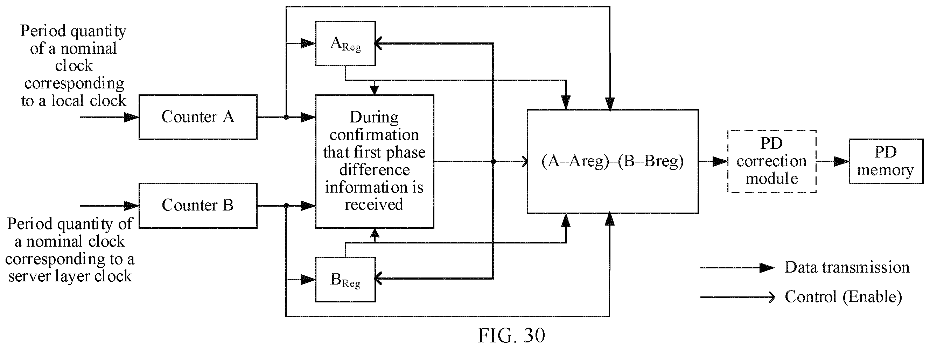

In a possible implementation, FIG. 30 is a fourth schematic flowchart of calculating a phase difference according to an embodiment of this application. As shown in FIG. 30, a counter A and a counter B respectively count a period quantity of a nominal clock corresponding to a local clock and a period quantity of a nominal clock corresponding to a server layer clock.

Specifically, in the scenario shown in FIG. 30, when an intermediate device confirms that first phase difference information is received, the intermediate device triggers calculation of a current local phase difference. In some embodiments, when a data frame that carries the first phase difference information is a second OTN frame, the intermediate device confirms that a case in which the first phase difference information is received is determined by identifying a frame header of the second OTN frame. In this case, when the intermediate device identifies the frame header of the second OTN frame that carries the first phase difference information, or once the intermediate device identifies the frame header of the second OTN frame that carries the first phase difference information, the intermediate device triggers a procedure of calculating the local phase difference.

It may be understood that because a process in which the intermediate device obtains the first phase difference information from the second OTN frame takes time, in some other embodiments, a moment at which the intermediate device triggers calculation of the local phase difference may be understood as any moment between a moment at which the frame header of the second OTN frame is identified and a moment at which first phase difference information carried in an overhead area is obtained from the second OTN frame.

Specifically, a process in which the intermediate device calculates the local phase difference is the same as the process in FIG. 28. In other words, when the intermediate device triggers calculation, the intermediate device records current values of the counter A and the counter B, and with reference to $A_{\mathrm{Reg}}$ and $B_{\mathrm{Reg}}$ that are stored in a storage unit after the local phase difference is calculated previously, calculates a step value of the period quantity of the nominal clock corresponding to the local clock and a step value of the period quantity of the nominal clock corresponding to the server layer clock since the previous calculation of the local phase difference, namely, (A-$A_{\mathrm{Reg}}$) and (B-$B_{\mathrm{Reg}}$). The current local phase difference is calculated by using step values of the counter A and the counter B, and in addition, a subtractor enables the storage unit $A_{\mathrm{Reg}}$ and the storage unit $B_{\mathrm{Reg}}$ to respectively store period values at the moment for next calculation. In other words, the storage unit $A_{\mathrm{Reg}}$ updates the stored period value to a value of the counter A at a trigger moment, and the storage unit $B_{\mathrm{Reg}}$ updates the stored period value to a value of the counter B at a trigger moment. After the subtractor calculates a phase difference, the generated phase difference is corrected by a PD correction module and stored in a PD memory. Actually, FIG. 23 is a diagram showing a special case of FIG. 30. In other words, a faster clock is always selected from the local clock and the server layer clock as a reference clock. In other words, the moment for triggering calculation of the local phase difference is a moment at which either of the local clock and the server layer clock counts to an expected period.

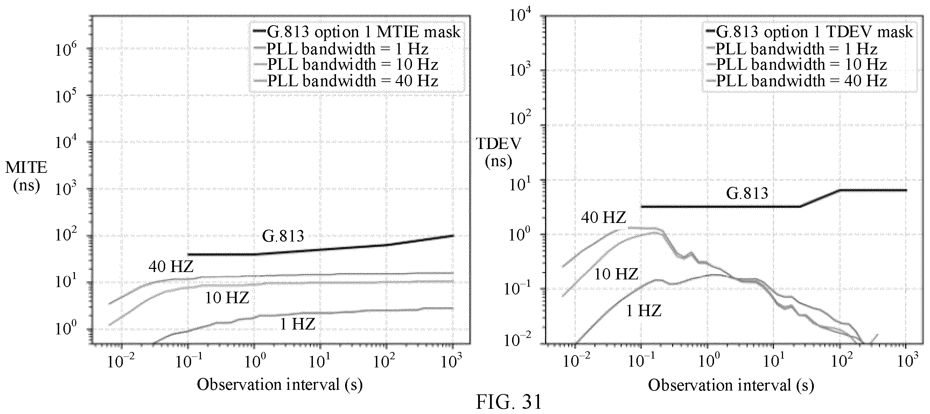

FIG. 31 shows clock performance obtained through simulation for an intermediate device by using a solution of performing phase difference calculation when it is confirmed that first phase difference information is received. Simulation parameters are set as follows: A destination device is in a closed-loop setting of a phase-locked loop (phase-locked loop, PLL) of a sink end, a period of an overhead area that carries phase difference information is 3.2768 ms, a frequency of a nominal clock is 312.5MHz, and frequency deviations of 21 intermediate devices are randomly distributed in a range of ±20 ppm. Simulation results of a maximum time interval error (maximum time interval error, MTIE) and a time deviation (time deviation, TDEV) show that the solution provided in embodiments of this application can bring good clock recovery performance. A requirement of a G.813 clock performance template is met under a condition of a high loop bandwidth of a sink end.

Table 1 shows possible values of parameters when a first OTN frame is an ODU2 according to an embodiment of this application.

**Table 1**

| F/fODU2 | 1/128 | 1/64 | 1/32 | 1/16 | 1/10 | 1/8 |
|---|---|---|---|---|---|---|
| F (MHz) | 78.416 | 156.832 | 313.665 | 627.330 | 1003.727 | 1254.659 |
| Tnominal=1/F (ms) | 12.752 | 6.376 | 3.188 | 1.594 | 0.996 | 0.797 |
| N(=T/Tnominal, With T=3.188 ms) | 2.5E5 | 5E5 | 1E6 | 2E6 | 3.2E6 | 4E6 |
| $\Delta\pm N$ (=$\pm N\times 20$ ppm, or =$\pm F\times T\times 20$ ppm) | $\pm 5$ | $\pm 10$ | $\pm 20$ | $\pm 40$ | $\pm 64$ | $\pm 80$ |

Specifically, in Table 1, F is a frequency of a nominal clock, fODU2 is a frequency (10.0372739240506 GHz) of an ODU2, Tnominal is a period of the nominal clock, N is a period quantity of the nominal clock within a measurement time period T of 3.188 ms, and $\Delta$N is a deviation value of N under a deviation of $\pm$20 ppm. In some embodiments, when a moment at which it is confirmed that the first phase difference information is received is used as a moment for triggering calculation of a local phase difference, T is a period (or referred to as a time interval of an overhead area that carries the first phase difference information) of an overhead area that carries the first phase difference information, for example, about 3 ms.

Considering that one byte of each overhead area carries the phase difference information and that at least one bit indicates that information included in first information is second phase difference information or fault information, seven bits may be used to record $\Delta$N. In this way, a range of $\Delta$N needs to be controlled within $\pm$63. In this way, F needs to be within 1000 MHz (or 1 GHz).

The G.813 clock template requires that a clock phase deviation be within 100 ns. An error of a period of one nominal clock may be caused by different reference clocks used by different nodes. A smaller period of the nominal clock indicates a smaller error. Considering that one link can have about 10 devices (nodes), the period of the nominal clock needs to be less than or equal to 10 ns (nanosecond).

Based on the foregoing two points, the frequency F of the nominal clock needs to range from 100 MHz to 1 GHz.

If it is assumed that the period quantity of the nominal clock in a measurement time period of a phase difference is N being equal to 1000000, a frequency of a server layer clock, a frequency of a local clock of each device, the frequency of the nominal clock, a period of the nominal clock, the measurement time period of the phase difference, and a period of an OSU frame may be designed as the following values.

Frequency of a server layer clock: fserver=fODU2=10.0372739240506 GHz

Frequency of a local clock: flocal=fODU2/32=313.6648 MHz

Frequency of a nominal clock: F=fODU2/32=313.6648 MHz

Period of a nominal clock: Tnominal=1/fnominal=3.1881166 ns

Period quantity of a nominal clock in a measurement time period of a phase difference: N=F·T=1,000,000

Measurement time period of a phase difference: T=N·Tnominal=3.1881166 ms

Period of an OSU frame: 11.7533 ms

The period of the overhead area that carries the phase difference information is 1/4 period of the OSU frame, namely, 2.9383 ms, which satisfies a case in which the period T is greater than the period of the overhead area that carries the phase difference information. When a moment at which it is confirmed that the first phase difference information is received is used as the moment for triggering calculation of the local phase difference, T is a period (or referred to as a time interval of an overhead area that carries the first phase difference information) of an overhead area that carries the first phase difference information, for example, about 3 ms.

FIG. 26 is a block diagram of an OTN apparatus 1500 according to an embodiment of this application. The apparatus 1500 includes a receiving module 1501, and the receiving module 1501 may be configured to implement a corresponding receiving function. The receiving module 1501 may be further referred to as a receiving unit.

The apparatus 1500 further includes a processing module 1502, and the processing module 1502 may be configured to implement a corresponding processing function.

The apparatus 1500 further includes a sending module 1503. The sending module 1503 may be configured to implement a corresponding sending function, and the sending module 1503 may be further referred to as a sending unit.

Optionally, the apparatus 1500 further includes a storage unit. The storage unit may be configured to store at least one of instructions, data, and another configuration parameter. The processing module 1502 may read content stored in the storage unit, so that the apparatus implements actions of related apparatuses in the foregoing method embodiments.

The apparatus 1500 may be configured to perform actions performed by the destination device, the sending device, or the intermediate device in the foregoing method embodiments. In this case, the apparatus 1500 may be a component of the destination device, the sending device, or the intermediate device. The receiving module 1501 is configured to perform receiving-related operations of the destination device, the sending device, or the intermediate device in the foregoing method embodiments. The processing module 1502 is configured to perform processing-related operations of the destination device, the sending device, or the intermediate device in the foregoing method embodiments. The sending module 1503 is configured to perform sending-related operations of the destination device, the sending device, or the intermediate device in the foregoing method embodiments.

It should be understood that a specific process in which the modules perform the foregoing corresponding steps has been described in detail in the foregoing method embodiments. For brevity, details are not described herein again.

FIG. 27 is a possible diagram of a structure of an OTN device 1150. The device is a destination device, a sending device, or an intermediate device. As shown in FIG. 27, the device 1150 includes a processor 1151, an optical transceiver 1152, and a memory 1153. The memory 1153 is optional. The device 1150 may be used in both a transmitting side device (for example, a transmitting device) and a receiving side device (for example, the foregoing destination device).

When applied to the transmitting side device, the processor 1151 and the optical transceiver 1152 are configured to implement the method performed by the sending device or the intermediate device shown in FIG. 4. In an implementation process, the steps of the processing procedure may be performed via an integrated logic circuit of hardware in the processor 1151 or instructions in a form of software to complete the method performed by the sending device in the foregoing accompanying drawings. The optical transceiver 1152 is configured to receive and process an OTN frame that is sent, and send the OTN frame to a peer device (also referred to as a receiving end device).

When applied to the receiving side device, the processor 1151 and the optical transceiver 1152 are configured to implement the method performed by the destination device or the intermediate device shown in FIG. 4. In an implementation process, the steps of the processing procedure may be performed via an integrated logic circuit of hardware in the processor 1151 or instructions in a form of software to complete the method performed by the receiving side device in the foregoing accompanying drawings. The optical transceiver 1152 is configured to receive an OTN frame sent by a peer device (also referred to as a transmitting end device), to send the OTN frame to the processor 1151 for subsequent processing.

The memory 1153 is configured to store instructions, to enable the processor 1151 to perform the steps as mentioned in the foregoing figures. Alternatively, the memory 1153 may be configured to store other instructions, to configure a parameter of the processor 1151 to implement a corresponding function.

It should be noted that in the diagram of the hardware structure of the network device shown in FIG. 2, the processor 1151 and the memory 1153 may be located in a tributary board, or may be located in a board integrating a tributary and a line. Alternatively, there are a plurality of processors 1151 and a plurality of memories 1153, which are respectively located on a tributary board and a line board, and the two boards cooperate to complete the foregoing method steps.

It should be noted that, the apparatus in FIG. 27 may also be configured to perform the method step involved in the variations of the embodiments shown in the foregoing accompanying drawings. Details are not described herein again.

Based on the foregoing embodiments, embodiments of this application further provide a computer-readable storage medium. The storage medium stores a software program. When the software program is read and executed by one or more processors, the method provided in any one or more of the foregoing embodiments may be implemented. The computer-readable storage medium may include any medium that can store program code, for example, a USB flash drive, a removable hard disk, a read-only memory, a random access memory, a magnetic disk, or an optical disc.

Based on the foregoing embodiments, embodiments of this application further provide a chip. The chip includes a processor and is configured to implement functions in any one or more of the foregoing embodiments, for example, obtaining or processing the OTN frame in the foregoing method. Optionally, the chip further includes a memory, and the memory is configured to store necessary program instructions and data to be executed by the processor. The chip may include a chip, or include a chip and another discrete device.

Apparently, a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that, the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that, the implementation goes beyond the protection scope of this application.

In the several embodiments provided in this application, it should be understood that, the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A method for clock recovery, applied to a destination device and comprising:

receiving a first optical transport network OTN frame data stream;

obtaining a server layer clock from the first OTN frame data stream;

obtaining, from the first OTN frame data stream, phase difference information carried in a second OTN frame carried in the first OTN frame data stream, wherein the phase difference information is a sum of phase differences between one or more groups of two adjacent upstream devices in one or more upstream devices of the destination device through which the second OTN frame passes, and the phase differences between the one or more groups of two adjacent upstream devices are an integer quantity of periods of a reference clock, wherein a period of an overhead area that carries the phase difference information is less than or equal to 1/2 of a period of the second OTN frame; and

adjusting a reference clock of the second OTN frame based on the server layer clock and the phase difference information, wherein the reference clock of the second OTN frame is used to recover a clock of the second OTN frame.

2. The method according to claim 1, wherein a period T in which a phase difference between the destination device and an adjacent upstream device of the destination device is generated is greater than the period of the overhead area that carries the phase difference information.

3. The method according to claim 1 or 2, wherein a frequency F of the reference clock of the second OTN frame is greater than or equal to a rate of the second OTN frame.

4. The method according to claim 3, wherein the frequency F and the period T satisfy: $(F * T * 20\text{ppm}) < 10$

5. A method for clock recovery, applied to a destination device and comprising:

receiving a first optical transport network OTN frame data stream;

obtaining a server layer clock from the first OTN frame data stream;

obtaining, from the first OTN frame data stream, first phase difference information carried in a second OTN frame carried in the first OTN frame data stream, wherein the first phase difference information is a sum of phase differences between one or more groups of two adjacent upstream devices in one or more upstream devices of the destination device through which the second OTN frame passes, and the phase differences between the one or more groups of two adjacent upstream devices are an integer quantity of periods of a nominal clock, wherein the period of the nominal clock is less than or equal to 10 ns;

generating a local phase difference based on a reference clock of the second OTN frame of the destination device and the server layer clock, wherein the reference clock of the second OTN frame of the destination device is used to recover a clock of the second OTN frame;

accumulating the local phase difference to the first phase difference information to generate second phase difference information; and

adjusting the reference clock of the second OTN frame of the destination device based on the second phase difference information.

6. The method according to claim 5, wherein the adjusting the reference clock of the second OTN frame of the destination device based on the second phase difference information comprises:

generating a frequency deviation based on the second phase difference information, wherein the frequency deviation is a product of a quantity of nominal clocks corresponding to the second phase difference information and the nominal clock; and

adjusting the reference clock of the second OTN frame of the destination device based on the frequency deviation.

7. The method according to claim 5, wherein a period T in which the local phase difference is generated is greater than a period of an overhead area of the second OTN frame that carries the first phase difference information.

8. The method according to claim 7, wherein a frequency F of the nominal clock is greater than or equal to a rate of the second OTN frame.

9. The method according to claim 8, wherein the frequency F and the period T satisfy: $(F \times T \times 20\ ppm) < 64$ .

**10.** The method according to any one of claims 7 to 9, wherein the period T is less than 6 ms.

**11.** The method according to claim 10, wherein the period T is 4 ms.

**12.** The method according to any one of claims 8 to 11, wherein the frequency F ranges from 100 MHz to 1 GHz.

**13.** The method according to any one of claims 5 to 12, wherein the period of the overhead area of the second OTN frame that carries the first phase difference information is 3 ms.

**14.** The method according to any one of claims 5 to 13, wherein an error of the recovered clock of the second OTN frame is less than or equal to 100 ns.

**15.** The method according to any one of claims 5 to 14, wherein the first phase difference information is carried in a plurality of overhead areas of the second OTN frame.

**16.** The method according to claim 15, wherein one byte of each of the plurality of overhead areas carries the first phase difference information.

**17.** The method according to claim 15, wherein a plurality of bytes of each of the plurality of overhead areas carry a plurality of pieces of first phase difference information.

**18.** The method according to any one of claims 5 to 17, wherein the second OTN frame is an optical service unit OSU frame.

**19.** The method according to any one of claims 5 to 18, wherein a first OTN frame is an optical data unit ODUk frame or an ODUflex frame.

**20.** The method according to any one of claims 5 to 19, wherein an amplitude at which a frequency of the reference clock of the second OTN frame of the destination device changes with time is within a range of $\pm20$ ppm.

**21.** The method according to any one of claims 5 to 20, wherein the adjusting the reference clock of the second OTN frame of the destination device based on the second phase difference information comprises:
adjusting the reference clock of the second OTN frame of the destination device within a time period $T_c$ based on the second phase difference information, wherein $T_c$ satisfies: $T_c \geq T / (20\text{ppm})$.

**22.** A method for clock recovery, applied to an intermediate device and comprising:

receiving a first optical transport network OTN frame data stream;
obtaining a server layer clock from the first OTN frame data stream;
obtaining, from the first OTN frame data stream, first phase difference information carried in a second OTN frame carried in the first OTN frame data stream, wherein the first phase difference information is a sum of phase differences between one or more groups of two adjacent upstream devices in one or more upstream devices of the intermediate device through which the second OTN frame passes, and the phase differences between the one or more groups of two adjacent upstream devices are an integer quantity of periods of a nominal clock, wherein the period of the nominal clock is less than or equal to 10 ns;
generating a local phase difference based on a clock of the intermediate device and the server layer clock;
accumulating the local phase difference to the first phase difference information to generate second phase difference information; and
sending the second phase difference information to an adjacent downstream device.

**23.** The method according to claim 22, wherein
a period T in which the local phase difference is generated is greater than a period of an overhead area of the second OTN frame that carries the first phase difference information.

**24.** The method according to claim 23, wherein
a frequency F of a nominal clock is greater than or equal to a rate of the second OTN frame.

**25.** The method according to claim 24, wherein the frequency F and the period T satisfy: $(F \times T \times 20\ ppm) < 64$ .

26. The method according to any one of claims 23 to 25, wherein the period T is less than 6 ms.

27. The method according to claim 26, wherein the period T is 4 ms.

28. The method according to any one of claims 24 to 27, wherein the frequency F ranges from 100 MHz to 1 GHz.

29. The method according to any one of claims 22 to 28, wherein the period of the overhead area of the second OTN frame that carries the first phase difference information is 3 ms.

30. The method according to any one of claims 22 to 29, wherein the first phase difference information is carried in a plurality of overhead areas of the second OTN frame.

31. The method according to claim 30, wherein one byte of each of the plurality of overhead areas carries the first phase difference information.

32. The method according to claim 31, wherein the method further comprises:
splitting the second phase difference information into a plurality of pieces of partial phase difference information when an absolute value of the second phase difference information is greater than a preset threshold, wherein the plurality of pieces of partial phase difference information are carried in the plurality of overhead areas of the second OTN frame sent by the intermediate device.

33. The method according to any one of claims 22 to 32, wherein the second OTN frame is an optical service unit OSU frame.

34. The method according to any one of claims 22 to 33, wherein a first OTN frame is an optical data unit ODU frame, and the ODU frame is an ODUk frame or an ODUflex frame.

35. A method for clock recovery, applied to an intermediate device and comprising:

receiving a first optical transport network OTN frame data stream;
obtaining a server layer clock from the first OTN frame data stream;
obtaining, from the first OTN frame data stream, first phase difference information carried in a second OTN frame carried in the first OTN frame data stream, wherein the first phase difference information is a sum of phase differences between one or more groups of two adjacent upstream devices in one or more upstream devices of the intermediate device through which the second OTN frame passes, and the phase differences between the one or more groups of two adjacent upstream devices are an integer quantity of periods of a nominal clock, wherein the period of the nominal clock is less than or equal to 10 ns;
generating a local phase difference based on a clock of the intermediate device and the server layer clock;
generating first information, wherein the first information comprises second phase difference information or fault information, the second phase difference information is generated by accumulating the local phase difference to the first phase difference information, and the fault information indicates that a clock abnormality occurs in the intermediate device; and
sending the first information to an adjacent downstream device.

36. The method according to claim 35, wherein the generating a local phase difference based on a clock of the intermediate device and the server layer clock comprises:

when confirming that the first phase difference information is received, counting a period quantity N1 of a nominal clock corresponding to the clock of the intermediate device, and counting a period quantity N2 of a nominal clock corresponding to the server layer clock; and
calculating a difference between N1 and N2 as the local phase difference.

37. The method according to claim 36, wherein the confirming that the first phase difference information is received is determined by identifying a frame header of the second OTN frame.

38. The method according to claim 35, wherein the generating a local phase difference based on a clock of the intermediate device and the server layer clock comprises:

determining, based on speeds of the clock of the intermediate device and the server layer clock, to use a faster clock, a slower clock, or an average clock as a reference clock; and

generating the local phase difference based on the reference clock.

**39.** The method according to claim 38, wherein when a moment for triggering calculation of the local phase difference is met, a period quantity N1 of a nominal clock corresponding to the clock of the intermediate device and a period quantity N2 of a nominal clock corresponding to the server layer clock are counted, wherein the moment for triggering calculation of the local phase difference is a moment at which either of the period quantity of the nominal clock corresponding to the clock of the intermediate device and the period quantity of the nominal clock corresponding to the server layer clock is earlier equal to a preset expected period N, or the moment for triggering calculation of the local phase difference is a moment at which either of the period quantity of the nominal clock corresponding to the clock of the intermediate device and the period quantity of the nominal clock corresponding to the server layer clock is later equal to a preset expected period N, and the local phase difference is a difference between N1 and N2.

**40.** The method according to claim 36 or 37, wherein $N = F \times T$, F is a frequency of the nominal clock, and T is a period in which the local phase difference is generated.

**41.** The method according to claim 36 or 40, wherein the method further comprises:

determining the nominal clock corresponding to the clock of the intermediate device as a reference clock based on a moment for triggering calculation of the local phase difference, wherein the reference clock is used to determine a detection period; or

determining the nominal clock corresponding to the server layer clock as a reference clock based on a moment for triggering calculation of the local phase difference.

**42.** The method according to any one of claims 35 to 41, wherein the method further comprises:
splitting the second phase difference information into a plurality of pieces of partial phase difference information when an absolute value of the second phase difference information is greater than a preset threshold, wherein the plurality of pieces of partial phase difference information are carried in a plurality of overhead areas of the second OTN frame sent by the intermediate device.

**43.** The method according to any one of claims 35 to 42, wherein the method further comprises:

obtaining a plurality of pieces of phase difference information carried by a plurality of bytes of each of the plurality of overhead areas of the second OTN frame; and

obtaining the first phase difference information based on the plurality of pieces of phase difference information.

**44.** The method according to claim 35, wherein the generating fault information comprises:

counting a period quantity N1 of a nominal clock corresponding to the clock of the intermediate device;

counting a period quantity N2 of a nominal clock corresponding to the server layer clock; and

generating the fault information when N1 does not belong to a preset interval and/or N2 does not belong to the preset interval.

**45.** The method according to claim 44, wherein the preset interval is $[N \times (1 - 20\ ppm), N \times (1+20\ ppm)]$.

**46.** The method according to claim 35, wherein the generating fault information comprises:

counting a period quantity N1 of a nominal clock corresponding to the clock of the intermediate device;

counting a period quantity N2 of a nominal clock corresponding to the server layer clock; and

generating the fault information when a difference between N1 and N2 is not equal to -1, 0, or 1 within preset time.

**47.** The method according to claim 46, wherein the preset time is $T_{\text{Nominal}} \times 1/(40ppm)$ or $T_{\text{Nominal}} \times 25000$, and $T_{\text{Nominal}}$ is the period of the nominal clock.

**48.** The method according to any one of claims 35 to 47, wherein the first information is carried in the overhead area of the second OTN frame sent by the intermediate device, the first information occupies at least one byte, and at least one bit in the at least one byte indicates that information comprised in the first information is the second phase difference information or the fault information.

49. The method according to claim 45, wherein the first information comprises the fault information, and the fault information comprises a quantity of nodes between a faulty intermediate device and a destination device.

50. The method according to claim 49, wherein the quantity of nodes between the faulty intermediate device and the destination device is carried by at least five bits in at least one byte occupied by the first information.

51. An optical transport network OTN apparatus, comprising:

a memory, configured to store instructions; and
a processor, configured to invoke the instructions from the memory and run the instructions, to enable the apparatus to perform the method according to any one of claims 1 to 50.

FIG. 1

FIG. 2

ODUk overhead

OPUk overhead

OPUk payload area

FIG. 3

| Sending device | Intermediate device #1 | Destination device |
|---|---|---|

S410: Send a first OTN frame data stream →

S420: Obtain a server layer clock and first phase difference information of a second OTN frame from the first OTN frame data stream

S430: Generate a phase difference between the intermediate device #1 and the sending device based on the server layer clock

S440: Generate second phase difference information

S450: Send the first OTN frame data stream →

S460: Obtain, from the first OTN frame data stream, the server layer clock and the second phase difference information carried in the second OTN frame

S470: Adjust a reference clock of the second OTN frame based on the second phase difference information and the server layer clock

FIG. 4

OSU #1                          OSU #n

| 4N bytes | ... | 4N bytes |

Interweaving

| ODU | Overhead | Payload |

FIG. 5

n1

Reference
clock of a
second OTN
frame of a
first device

n2
Period T in which
a phase difference
is generated

Reference clock
of a second OTN
frame of a second
device

Two manners for calculating the phase difference: first: n1–n2
second: n2–n1

FIG. 6

| Overhead area | Payload area | Overhead area | Payload area |
|---|---|---|---|

Period (n slots) of the overhead area

Period (2n slots) of a second OTN frame

FIG. 7

| Overhead area | Payload area | Overhead area | Payload area | Overhead area | Payload area |
|---|---|---|---|---|---|

Period (n slots) of
the overhead area

Period (3n slots) of a second OTN frame

FIG. 8

| Overhead area | Payload area | Overhead area | Payload area | Overhead area | Payload area | Overhead area | Payload area |

Period (n slots) of
the overhead area

Period (4n slots) of a second OTN frame

FIG. 9

FIG. 10

FIG. 11

FIG. 12

1021

Phase difference
information

MA0 *α

ACC → MA1 *β

+ → Frequency
deviation

FIG. 13

1022

Phase difference
information

NL → MA0 *α

ACC → MA1 *β

+ → Frequency
deviation

FIG. 14

| Sending device | Intermediate device #1 | ... | Intermediate device #N | | Destination device |
|---|---|---|---|---|---|

S1501: Send a first OTN frame data stream →

S1502: Obtain a server layer clock and first phase difference information of a second OTN frame from the first OTN frame data stream

S1503: Generate a local phase difference based on a clock of the intermediate device #1 and the server layer clock

S1504: Accumulate the local phase difference to the first phase difference information to generate second phase difference information

S1505: Send the first OTN frame data stream to an adjacent downstream intermediate device

S1506: Receive a first OTN frame data stream from an adjacent upstream intermediate device

S1507: Obtain a server layer clock and first phase difference information of a second OTN frame from the first OTN frame data stream

S1508: Generate a local phase difference based on a clock of the intermediate device #N and the server layer clock

S1509: Accumulate the local phase difference to the first phase difference information to generate second phase difference information

TO FIG. 15B          TO FIG. 15B

FIG. 15A

CONT. FROM
FIG. 15A

CONT. FROM
FIG. 15A

S1510: Send a first
OTN frame data stream

S1511: Obtain a server layer clock
and first phase difference information
of a second OTN frame from the first
OTN frame data stream

S1512: Generate a local phase
difference based on a reference clock
of the second OTN frame of the
destination device and the server
layer clock

S1513: Accumulate the local phase
difference to the first phase difference
information to generate second phase
difference information

S1514: Adjust a clock control signal
of the reference clock of the second
OTN frame of the destination device
based on the second phase difference
information

S1515: Adjust the reference clock of
the second OTN frame based on the
clock signal

FIG. 15B

FIG. 16

Reference clock of
an OSU frame of a
destination device

Clock control signal

OSU frame data stream

ODU frame
data stream

OSU frame
demapping

OSU
frame
switching

Accumulate a local
phase difference to first
phase difference
information to generate
second phase difference
information

Clock
recovery for
an OSU
frame service
data stream

Output the
OSU frame
data stream

Period quantity of a
nominal clock
corresponding to a
server layer clock

Calculate a local phase
difference

Period quantity of a
nominal clock
corresponding to the
reference clock of the
OSU frame of the
destination device

FIG. 17

| Receive a first OTN frame data stream | S1801 |

| Obtain, from the first OTN frame data stream, a server layer clock and first phase difference information carried in a second OTN frame carried in the first OTN frame data stream | S1802 |

| Generate a local phase difference based on a clock of an intermediate device and the server layer clock | S1803 |

| Generate first information | S1804 |

| Send the first information | S1805 |

FIG. 18

| 0 | | | | | | | |

Normal

Second phase difference information

| 1 | | | | | | | |

Fault   Fault        Reserve
        confirmation
        of a
        downstream
        device

Quantity of faulty nodes

FIG. 19

Receive a first OTN frame data stream — S2001

Obtain, from the first OTN frame data stream, a server layer clock and first phase difference information carried in a second OTN frame carried in the first OTN frame data stream — S2002

When a moment for triggering calculation of a local phase difference is met, generate the local phase difference based on a local clock of an intermediate device and the server layer clock — S2003

Generate second phase difference information — S2004

Send the second phase difference information — S2005

FIG. 20

FIG. 21

FIG. 22

Solution of using a local clock as a reference clock

Solution of using a unified faster or slower clock as a reference clock

FIG. 23

Solution of using a local clock as a reference clock

Solution of using a unified faster or slower clock as a reference clock

FIG. 24

[–20, 20, –20, 20, –20, 20, –20, 20, –20, 20, –20] ppm

FIG. 25

FIG. 26

FIG. 27

Period quantity
of a nominal
clock
corresponding
to a local clock

Period quantity of
a nominal clock
corresponding to a
server layer clock

Counter A

Counter B

$A_{Reg}$

$B_{Reg}$

Moment for
triggering
calculation of a
local phase
difference

(A–Areg)–(B–Breg)

PD
correction
module

PD
memory

Data transmission

Control (Enable)

FIG. 28

EP 4 629 710 A1

FIG. 29

FIG. 30

FIG. 31

## INTERNATIONAL SEARCH REPORT

| | International application No. |
|---|---|
| | **PCT/CN2024/071710** |

### A. CLASSIFICATION OF SUBJECT MATTER

H04W56/00(2009.01)i; H04J3/06(2006.01)i

According to International Patent Classification (IPC) or to both national classification and IPC

### B. FIELDS SEARCHED

Minimum documentation searched (classification system followed by classification symbols)

IPC: H04L H04W H04J

Documentation searched other than minimum documentation to the extent that such documents are included in the fields searched

Electronic data base consulted during the international search (name of data base and, where practicable, search terms used)

CNTXT, WPABS, ENTXT, ENTXTC, ITU, IEEE: 光, 网络, 时钟, 时间, 恢复, 同步, 相邻, 邻居, 俩俩, 两两, 相位, 鉴相, 差, 累加, 加和, 之和, 的和, 相加, OTN, ODU, optical, clock, time, synchronization, phase, difference, error, PD, sum, delta, neighbor, node, device

### C. DOCUMENTS CONSIDERED TO BE RELEVANT

| Category* | Citation of document, with indication, where appropriate, of the relevant passages | Relevant to claim No. |
|---|---|---|
| A | CN 108242965 A (HUAWEI TECHNOLOGIES CO., LTD.) 03 July 2018 (2018-07-03) description, paragraphs 0002 and 0060-0096, and figure 6 | 1-51 |
| A | CN 115515033 A (HUAWEI TECHNOLOGIES CO., LTD.) 23 December 2022 (2022-12-23) entire document | 1-51 |
| A | CN 111787607 A (DATANG TERMINAL TECHNOLOGY CO., LTD.) 16 October 2020 (2020-10-16) entire document | 1-51 |
| A | CN 104349449 A (ZTE CORP.) 11 February 2015 (2015-02-11) entire document | 1-51 |
| A | JP 2012134918 A (NEC ENGINEERING LTD) 12 July 2012 (2012-07-12) entire document | 1-51 |
| A | WO 2012025140 A1 (TELEFONAKTIEBOLAGET L M ERICSSON (PUBL)) 01 March 2012 (2012-03-01) entire document | 1-51 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 March 2024** | **21 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/071710**

### C. DOCUMENTS CONSIDERED TO BE RELEVANT

| Category* | Citation of document, with indication, where appropriate, of the relevant passages | Relevant to claim No. |
|---|---|---|
| A | SIU, Sammy et al. "Time/phase synchronization distribution over Optical Transport Network(OTN)" <br> *2013 IEEE International Symposium on Precision Clock Synchronization for Measurement, Control and Communication (ISPCS) Proceedings,* 27 September 2013 (2013-09-27), <br> entire document | 1-51 |

Form PCT/ISA/210 (second sheet) (July 2022)

**INTERNATIONAL SEARCH REPORT**
Information on patent family members

International application No.

**PCT/CN2024/071710**

| Patent document cited in search report | | | Publication date (day/month/year) | Patent family member(s) | | | Publication date (day/month/year) |
|---|---|---|---|---|---|---|---|
| CN | 108242965 | A | 03 July 2018 | US | 2019312717 | A1 | 10 October 2019 |
| | | | | WO | 2018113539 | A1 | 28 June 2018 |
| | | | | EP | 3544210 | A1 | 25 September 2019 |
| | | | | CN | 110445568 | A | 12 November 2019 |
| CN | 115515033 | A | 23 December 2022 | CN | 112584259 | A | 30 March 2021 |
| | | | | WO | 2021063197 | A1 | 08 April 2021 |
| | | | | EP | 4027650 | A1 | 13 July 2022 |
| CN | 111787607 | A | 16 October 2020 | None | | | |
| CN | 104349449 | A | 11 February 2015 | None | | | |
| JP | 2012134918 | A | 12 July 2012 | None | | | |
| WO | 2012025140 | A1 | 01 March 2012 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310091418
- CN 202310127538
- CN 202310601034